Europäisches Patentamt

European Patent Office

Office européen des brevets

(19)

(11) Numéro de publication : **0 037 989**
**B1**

(12) FASCICULE DE BREVET EUROPÉEN

(45) Date de publication du fascicule du brevet :
28.12.83

(51) Int. Cl.³ : **B 65 G   1/08**, G 07 F 11/10

(21) Numéro de dépôt : 81102531.1

(22) Date de dépôt : 03.04.81

(54) Dispositif pour le stockage et la distribution automatique d'objets.

(30) Priorité : 10.04.80 FR 8008041

(43) Date de publication de la demande :
21.10.81 Bulletin 81/42

(45) Mention de la délivrance du brevet :
28.12.83 Bulletin 83/52

(84) Etats contractants désignés :
AT BE CH DE FR GB IT LI LU NL SE

(56) Documents cités :
DE-A- 2 326 591
FR-A- 2 138 272
FR-A- 2 175 958
US-A- 3 893 589
US-A- 4 000 821

(73) Titulaire : **Guigan, Jean**
**9, rue Jean Mermoz**
**F-75008 Paris (FR)**

(72) Inventeur : **Guigan, Jean**
**9, rue Jean Mermoz**
**F-75008 Paris (FR)**

(74) Mandataire : **Weinmiller, Jürgen et al**
**Zeppelinstrasse 63**
**D-8000 München 80 (DE)**

## Dispositif pour le stockage et la distribution automatique d'objets

La présente invention concerne le stockage et la distribution d'objets tels que par exemple des boîtes de médicaments.

Le stockage et la distribution d'objets de nature et de dimensions très diverses tels que les produits pharmaceutiques posent des problèmes de gestion et de manutention. Pour les résoudre, on a déjà pensé à des armoires de stockage et de distribution entièrement automatisées et gérées par calculateur. On connaît, notamment par la demande de brevet français n° 2.138.272 déposée par le demandeur, une armoire de stockage et de distribution automatique comportant : un ensemble de tiroirs coulissants partagés en casiers dans lesquels les objets sont empilés par catégories, un mécanisme d'extraction qui permet de retirer un objet à la base d'une pile d'un casier et qui est placé devant l'armoire hors de portée des tiroirs fermés, et des moteurs permettant d'ouvrir les tiroirs pour mettre leurs casiers à portée du mécanisme d'extraction. Le retrait d'un objet de l'armoire s'effectue, de manière automatique, sous la conduite du calculateur qui sélectionne le casier contenant l'objet désiré et commande le déplacement du tiroir le contenant pour le mettre à portée du moyen d'extraction. Une telle armoire de distribution, qui fonctionne parfaitement, présente l'inconvénient de nécessiter la motorisation de chaque tiroir, ce qui conduit à un prix de revient relativement important.

On connaît également par le brevet américain n° 3,893,589 un autre genre de distributeurs automatiques d'objets comportant deux ensembles dits « racks » amovibles qui forment deux demi-rangées de casiers verticaux et qui sont disposés au-dessus d'un couloir dans lequel se déplace un chariot extracteur. Chaque « rack » formé d'un châssis mécano-soudé est muni à la base de sa paroi frontale d'une tringle horizontale sur laquelle s'articulent, devant chaque casier, deux volets pivotants placés l'un devant l'autre et rappelés par des ressorts, l'un bloquant l'arête inférieure d'un objet de bas de pile étant repoussé par une came mobile du chariot extracteur, l'autre recouvrant le premier étant poussé par une came fixe contre l'avant-dernier objet du bas de pile.

La conception des casiers sous forme de « racks » et le montage des volets de blocage de l'objet de bas de pile et de coincement de l'avant-dernier objet de bas de pile sur une tringle horizontale commune montée à l'avant de chaque « rack » ne permettent pas une modification aisée des dimensions d'un ou plusieurs casiers pour les adapter aux évolutions des conditionnements des produits.

La présente invention a pour but un dispositif d'un coût de revient moindre que le premier cité, avec des casiers aux dimensions réglables qui permettent le stockage d'un nombre élevé d'objets de catégories très diverses, leur distribution automatique et leur réapprovisionnement aisé.

Elle a pour objet un dispositif pour le stockage et la distribution automatique d'objets comportant, comme dans US-A-3,893,589 :

— des casiers de stockage verticaux dans lesquels sont empilés les objets, lesdits casiers étant disposés selon au moins un alignement horizontal ou travée,

— un mécanisme d'éjection d'objets par casier procédant par coincement de l'avant-dernier objet du bas de pile avant la libération de l'objet du bas de pile,

— un chariot mobile par travée de casiers, ledit chariot mobile se déplaçant le long de la travée considérée,

— des moyens de guidage et d'entraînement de chaque chariot mobile,

— des premiers moyens d'actionnement des mécanismes d'éjection, solidaires de ces derniers, lesdits premiers moyens d'actionnement des mécanismes d'éjection des casiers d'une travée étant accessibles du chariot mobile desservant cette travée,

— des deuxièmes moyens d'actionnement des mécanismes d'éjection, solidaires de chaque chariot mobile, coopérant avec les premiers moyens d'actionnement des mécanismes d'éjection des casiers de la travée desservie par le chariot mobile considéré,

— des moyens de contrôle et de commande des déplacements de chaque chariot mobile,

— des moyens de commande pour commander les deuxièmes moyens d'actionnement solidaires de chaque chariot mobile,

— et des moyens de collecte des objets extraits des casiers.

Ce dispositif comporte en outre des corps plats ou cassettes qui servent de logement aux mécanismes d'éjection des casiers et s'encastrent dans des découpes pratiquées à la partie inférieure des parois avant ou arrière des casiers, des trappes, une par casier, manœuvrées par les mécanismes d'éjection, chacune fermant le fond d'un casier et étant articulée à la cassette d'un mécanisme d'éjection, et des patins de serrage, un par casier, manœuvrés par les mécanismes d'éjection, chacun permettant, pendant l'ouverture de la trappe du casier considéré, de coincer l'avant-dernier objet de la pile contre une paroi latérale du casier.

Le retrait automatique d'un objet du dispositif selon l'invention s'effectue sans déplacement des casiers qui, de ce fait, n'ont pas à être motorisés, par l'intermédiaire d'un chariot mobile se déplaçant pour déclencher le mécanisme d'éjection d'un casier contenant une pile d'objets de la catégorie désirée, puis pour réarmer ce mécanisme d'éjection une fois l'objet extrait du casier.

Le dispositif selon l'invention peut présenter en outre l'une au moins des caractéristiques suivantes :

— Les casiers sont répartis en groupes de deux alignements parallèles ou travées de longueurs sensiblement égales. Les deux travées d'un groupe sont séparées par un couloir dans lequel se déplacent les deux chariots mobiles qui les desservent et qui sont réunis en une seule pièce mobile.

— Les moyens de collecte des objets extraits des caisiers d'une travée comportent une lame bouteuse qui est fixée au chariot mobile desservant la travée et qui balaye l'espace sous-jacent aux casiers lors des déplacements du chariot mobile.

— L'espace sous-jacent aux casiers d'une travée, laissé libre pour l'évacuation des objets éjectés des casiers, débouche à l'une des extrémités de la travée dans une goulotte placée à l'extérieur du dispositif. Le chariot desservant la travée pousse une lame bouteuse en direction de la goulotte et ne peut déclencher l'éjection d'un objet que d'un casier situé au-delà de la lame bouteuse.

D'autres caractéristiques et avantages de l'invention ressortiront des revendications jointes et de la description d'un mode de réalisation donné à titre d'exemple. Cette description sera faite ci-après en regard du dessin dans lequel :

la figure 1 représente une vue en perspective d'un meuble faisant partie d'un dispositif selon l'invention et renfermant le stock d'objets ainsi qu'un mécanisme de distribution,

la figure 2 représente le dessus d'un tiroir du meuble de la figure 1,

la figure 3 représente une vue en coupe verticale d'un tiroir du meuble de la figure 2,

la figure 4 représente une vue partielle en perspective d'une travée de casiers d'un tiroir du meuble de la figure 1,

la figure 5 représente une vue de dessus d'une trappe, d'un patin de serrage et d'une cassette de mécanisme d'extraction d'objets équipant chaque casier de la travée représentée à la figure 4,

la figure 6 représente de manière partielle et schématique les patins de serrage et leurs pièces de montage vus de l'intérieur de deux casiers consécutifs de la travée représentée à la figure 4,

la figure 7 représente la base d'un casier de la travée illustrée à la figure 4, vue selon une coupe verticale montrant l'effet de blocage du patin de serrage sur l'avant-dernière boîte de la pile du casier,

la figure 8 est une vue en coupe horizontale selon la ligne VIII-VIII de la figure précédente,

la figure 9 est une succession de schémas illustrant différentes phases de fonctionnement du mécanisme d'extraction d'objets d'un casier de la travée représentée à la figure 4,

la figure 10 représente une vue d'une cassette, demi-boîtier enlevé, d'un mécanisme d'extraction de boîtes au repos,

la figure 11 est une coupe transversale selon la ligne XI-XI de la figure 10,

la figure 12 est une coupe transversale selon la ligne brisée XII-XII de la figure 10,

la figure 13 représente une vue d'une cassette, demi-boîtier enlevé, d'un mécanisme d'extraction de boîtes en cours de déclenchement,

la figure 14 représente une vue d'une cassette, demi-boîtier enlevé, d'un mécanisme d'extraction de boîtes en fin de déclenchement,

la figure 15 représente une coupe transversale partielle selon la ligne brisée XV-XV de la figure 14,

la figure 16 est une vue en perspective des principales pièces mobiles d'une cassette d'un mécanisme d'extraction de boîtes,

la figure 17 est une vue partielle, en perspective, d'une trappe, au voisinage de son articulation, d'un mécanisme d'extraction de boîtes d'un casier,

la figure 18 est une coupe horizontale partielle de deux travées de casiers d'un tiroir offrant une vue de dessus d'un chariot mobile les desservant,

la figure 19 est une vue de profil du chariot mobile représenté à la figure 18,

la figure 20 est une coupe de profil du chariot mobile représenté aux figures 18 et 19,

la figure 21 est une succession de schémas illustrant différentes phases de fonctionnement des circuits de commande du chariot mobile représenté à la figure 18 ainsi que différentes positions prises par ce même chariot pour l'actionnement et le réarmement du mécanisme d'extraction de boîtes d'un casier,

la figure 22 est une vue de dessus, partiellement coupée, d'une variante du patin de serrage et de sa pièce guide,

la figure 23 est une coupe transversale selon la ligne XXIII-XXIII de la figure 22,

la figure 24 est une vue de profil d'une variante de cassette renfermant un mécanisme d'extraction d'objet,

la figure 25 est une vue de face, l'un des demi-boîtiers enlevés et le mécanisme en position de repos, de la variante de cassette représentée à la figure 24

et la figure 26 est une coupe horizontale partielle de deux travées de casiers d'un tiroir offrant une vue de dessus d'un chariot mobile les desservant.

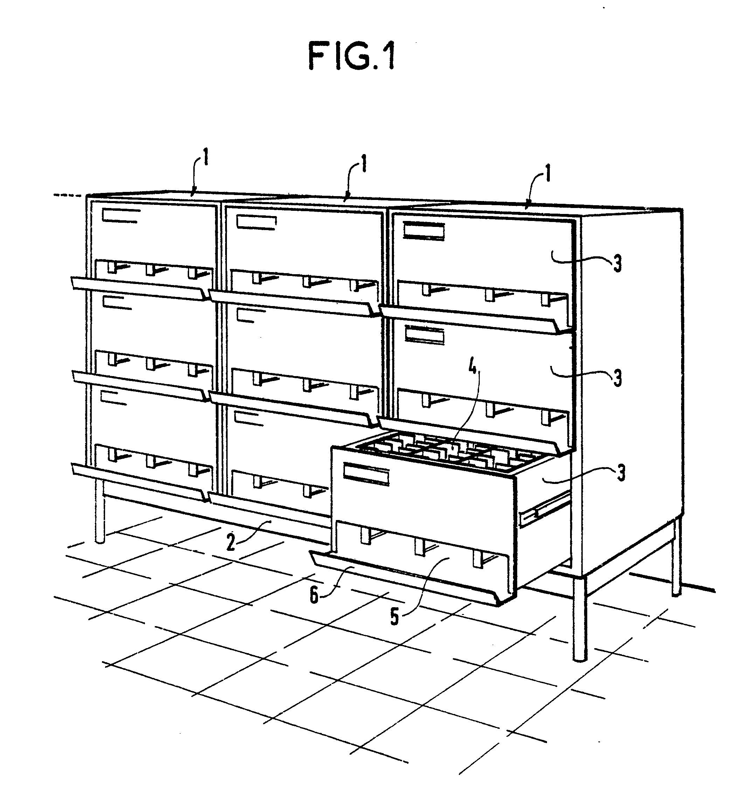

Le dispositif qui va être décrit est destiné au stockage et à la distribution automatique de boîtes de médicaments dans une officine pharmaceutique. La figure 1 représente un meuble faisant partie de ce dispositif et renfermant le stock de médicaments ainsi que le mécanisme de distribution des boîtes. Ce meuble est de conception modulaire. Il est formé de trois bacs 1 juxtaposés sur un piétement 2. Chaque bac comporte trois tiroirs superposés identiques 3. Un tiroir 3 constitue le module minimum. Il renferme, dans sa partie supérieure, un ensemble 4 de casiers verticaux dans lesquels des boîtes de médicaments sont empilées par catégorie et, dans sa partie inférieure, des espaces de dégagement 5 qui sont situés sous les casiers et débouchent dans le bas de la façade du tiroir, ainsi que le mécanisme de distribution qui permet d'éjecter une boîte de n'importe lequel des casiers dans les espaces de dégagement 5 puis à l'extérieur du tiroir. L'ouverture des espaces de dégagement 5 sur la façade d'un tiroir 3 donne sur une goulotte frontale 6 où aboutissent les boîtes de médicaments éjectées des casiers. Les tiroirs 3 coulissent sur des glissières et s'ouvrent suffisamment pour dégager le dessus des casiers et permettre leur approvisionnement en boîtes de médicaments.

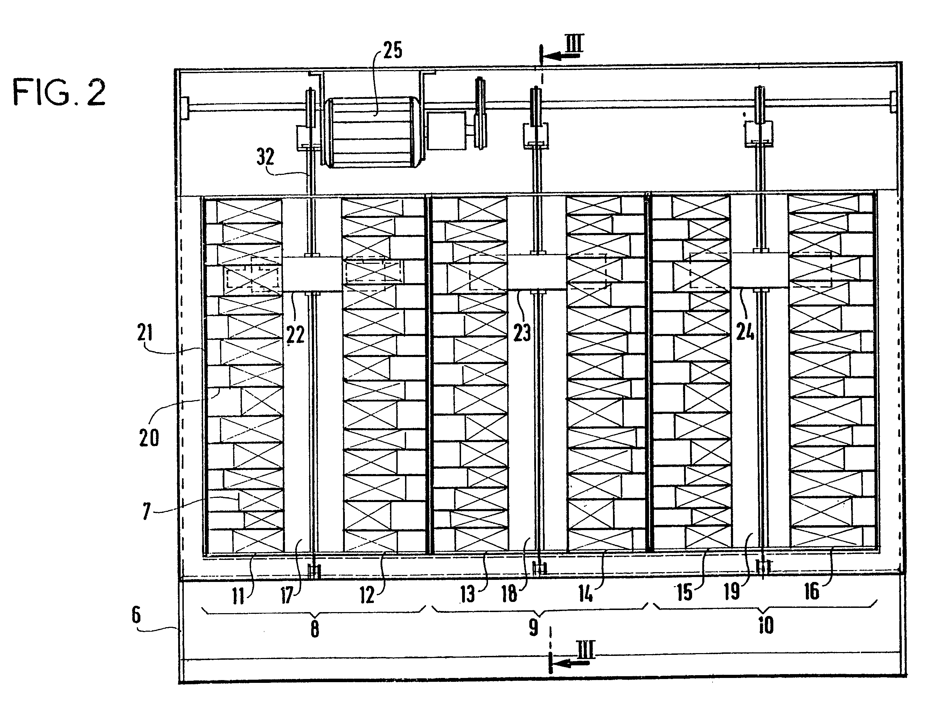

La figure 2 représente un tiroir 3 vu de dessus et montre la disposition de l'ensemble 4 des casiers verticaux. Les casiers 7 à section rectangulaire sont répartis en trois groupes identiques 8, 9, 10 et sont disposés dans chaque groupe 8 respectivement 9 et 10 selon deux travées horizontales 11 et 12 respectivement 13 et 14, 15 et 16 séparées par un couloir 17 respectivement 18 et 19. Les casiers 7 d'une travée sont constitués par des cloisons verticales 20 fixées par la tranche, avec un écartement réglable, sur une plaque support verticale 21 disposée parallèlement à la longueur d'un tiroir. Un mécanisme d'éjection placé à la base de chaque casier 7 et accessible du couloir contigu au casier permet d'extraire de ce dernier la boîte inférieure de la pile qu'il renferme. Un double chariot mobile 22 respectivement 23 et 24 se déplace dans chaque couloir 17 respectivement 18 et 19 et permet à la fois l'actionnement des mécanismes d'éjection des deux travées de casiers délimitant le couloir et l'entraînement des boîtes éjectées de ces casiers, hors des espaces de dégagement sous-jacents, en direction de la goulotte 6. Les chariots mobiles 22, 23, 24 sont guidés par un rail 32 dans leur couloir respectif 17, 18, 19 et entraînés en synchronisme par un unique moteur 25 à l'aide d'une transmission mécanique à base de câbles et de poulies.

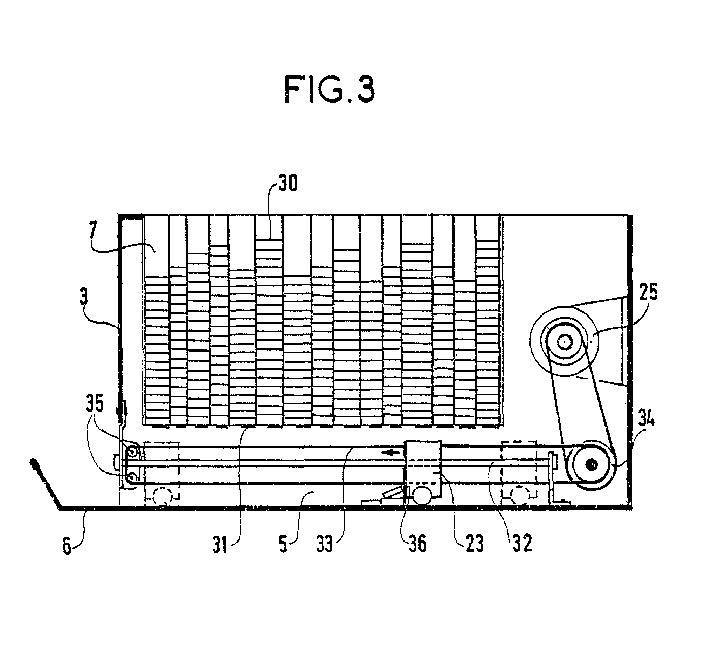

La figure 3 représente la coupe verticlae d'un tiroir selon la ligne III-III de la figure 2. On distingue sur cette figure les casiers 7 d'une travée 13 placés-au-dessus d'un espace de dégagement 5 aboutissant, à l'avant du tiroir 3, dans la goulotte 6. Ces casiers renferment des piles de boîtes 30 et ont un fond mobile constitué d'une trappe 31 articulée sur leur paroi arrière. Le chariot mobile 23 coulisse, sous les casiers, sur un rail de guidage 32 et est entraîné par un câble 33 monté en courroie de transmission entre une poulie motrice 34 et des poulies de renvoi 35 placées aux deux extrémités de son couloir. Une lame bouteuse 36 balaye l'espace de dégagement sous-jacent aux casiers. Elle est fixée au chariot mobile de manière à toujours se trouver entre l'arrière du tiroir et le casier dont le mécanisme d'éjection est à portée du chariot mobile.

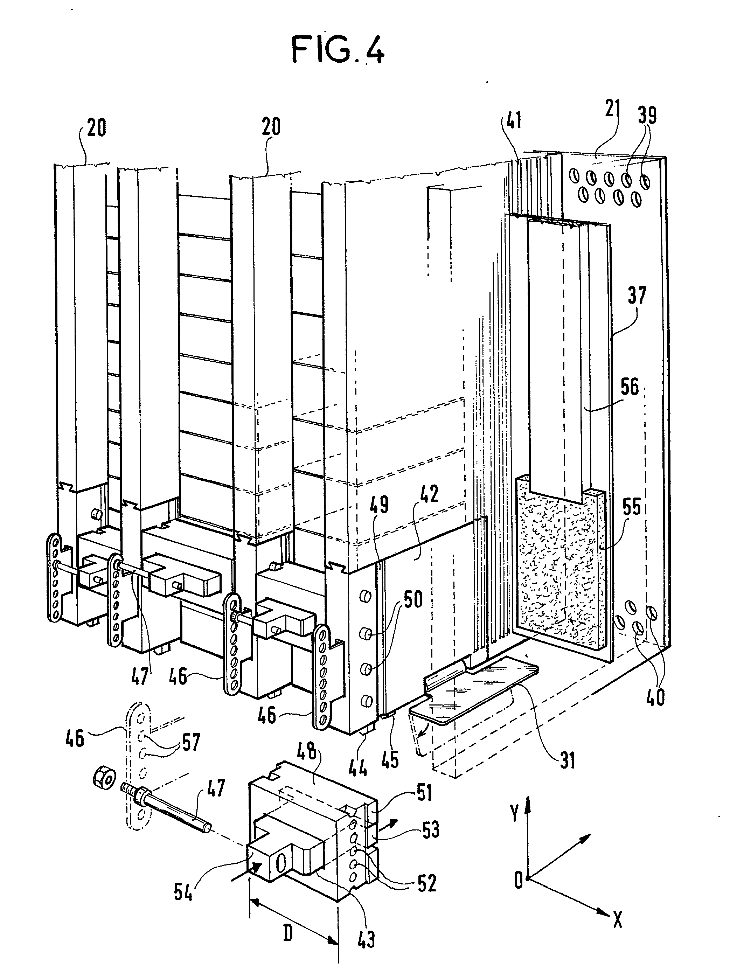

La figure 4 représente partiellement, en perspective, une travée de casiers (telle que 12, figure 2) vue depuis le couloir qui la dessert (22 dans l'exemple considéré). Un trièdre d'orientation rappelle la direction OX dans laquelle se trouve la façade du tiroir et la direction OY de la verticale ascendante. On retrouve dans cette figure 4 les cloisons verticales 20 qui sont fixées par la tranche à la plaque support verticale 21 et forment l'ossature des casiers. Ces cloisons verticales 20 sont toutes identiques. Leur coin inférieur, côté couloir, est découpé d'une large échancrure rectangulaire dans laquelle est fixé verticalement un corps plat 42, ou cassette, de mêmes dimensions que l'échancrure et de même épaisseur que la cloison, servant de logement à un mécanisme d'éjection.

Les casiers verticaux à section rectangulaire n'ont que trois parois verticales : deux parois avant et arrière constituées par les flancs en regard de deux cloisons adjacentes 20 et une paroi latérale qui les sépare de la plaque support verticale 21 et qui est constituée d'une plaquette 37 se fixant entre les flancs de deux cloisons verticales adjacentes 20. Leur quatrième paroi verticale, qui serait celle les séparant du couloir desservant la travée, est uniquement matérialisée par des joncs en caoutchouc disposés verticalement, face à face sur les bords des cloisons 20 mais non représentés pour éviter de surcharger la figure. Les joncs de caoutchouc guident les coins des boîtes et garantissent une présentation correcte des boîtes dans les mécanismes d'éjection situés à la base des casiers. Les casiers qui ont tous même hauteur présentent des largeurs et longueurs ajustables aux dimensions des boîtes qu'ils doivent recevoir. Leurs largeurs se règlent par les écartements entre les cloisons 20 et leurs longueurs par les écartements entre les plaquettes 37 et la plaque support 21.

Les cloisons 20 et la plaque support 21 constituent l'ossature des casiers d'une travée. Les cloisons 20 se montent sur la plaque support 21 à l'aide d'un système de pions qui s'emboîtent entre des ouvertures pratiquées en regard dans les tranches des cloisons 20 et dans la plaque support 21. Les ouvertures pratiquées dans la plaque support 21 sont réparties régulièrement selon deux groupes de rangées horizontales en quinconce disposés, l'un 39 au voisinage du bord supérieur, l'autre 40 au voisinage du bord inférieur de la plaque support 21. Les ouvertures sont pratiquées dans la tranche d'une cloison 20 selon une rangée verticale à des hauteurs correspondant à celles des rangées de trous pratiquées dans la plaque support 21. Ce système de montage permet, pour une cloison 20, un choix entre une multitude de positions discrètes faiblement espacées les unes des autres et donne une grande liberté pour le réglage des écartements entre cloisons 20. Ces dernières sont maintenues sur la plaque support 21 à l'aide d'un bandeau transversal non représenté, disposé devant les cloisons au niveau des bords supérieurs des cassettes 42 de mécanismes d'éjection et fixé par ses extrémités à la plaque support 21 à l'aide de tirants.

Le système de montage des plaquettes 37 entre les flancs de deux cloisons adjacentes 20 est constitué d'un réseau 41 de rainures verticales creusées dans les flancs de chaque cloison 20 au voisinage de la plaque support 21. Ces rainures sont obturées à leur extrémité inférieure et débouchent à leur extrémité supérieure. Les plaquettes 37, qui peuvent présenter différentes largeurs correspondant au choix des largeurs possibles pour les casiers, s'encastrent entre deux cloisons adjacentes 20 dans deux rainures en vis-à-vis.

Les boîtes sont extraites d'un casier à la base de la pile grâce à un mécanisme d'éjection propre à chaque casier qui comporte la trappe de fond 31, un patin de serrage 43 venant coincer la deuxième boîte de la pile avant et pendant l'ouverture de la trappe, et leurs pièces d'actionnement logées dans la cassette 42 fixée à la base de la cloison formant la paroi arrière du casier.

Chaque cassette 42 porte, échelonnés sur sa tranche inférieure depuis la plaque support 21 jusqu'au couloir, l'articulation d'une trappe 31 qui se ferme en direction de la façade du tiroir et deux boutons, l'un 45 d'armement et l'autre 44 de déclenchement du mécanisme d'éjection. Une tête 46 d'une première gâchette coulissant horizontalement émerge, côté couloir, de la tranche latérale de chaque cassette 42 et entraîne, par l'intermédiaire d'un axe 47 boulonné à angle droit, le patin de serrage 43 qui coulisse horizontalement dans une pièce guide 48 formant entretoise entre la cassette considérée 42 et celle qui la précède en direction de la façade du tiroir.

Chaque pièce guide 48 se place devant la base d'un casier, côté couloir, à hauteur de la deuxième boîte de la pile contenue dans le casier, devant et au-dessous des joncs de caoutchouc précités, entre les cassettes 42 portées par les cloisons délimitant le casier. Elles ont la forme d'un pavé percé d'une ouverture horizontale à section rectangulaire. Leurs largeurs D peuvent prendre diverses valeurs qui sont fonction des largeurs possibles des casiers. Elles se fixent par emboîtage entre les flancs des cassettes 42. Leurs faces et celles en regard des cassettes 42 comportent des formes d'emboîtage complémentaires et répétitives dans la direction verticale qui permettent un réglage en hauteur par petits pas. Ces surfaces complémentaires d'emboîtage se composent, sur le flanc de la cassette, au voisinage du couloir, d'une rainure verticale 49 et d'un ensemble de quatre goujons 50 régulièrement espacés sur une ligne verticale et, sur les flancs de la pièce guide 48, d'une arête verticale 51 de section complémentaire de celle de la rainure 49 et d'évidements circulaires 52 du diamètre des goujons 50 répartis selon une ligne verticale au tiers du pas d'écartement desdits goujons 50. La rainure verticale 49 coopère avec l'arête verticale 51 pour assurer une orientation correcte de la pièce guide 48 et donner au patin de serrage 43 une course horizontale. Les évidements 52 coopèrent avec les goujons 50 pour bloquer la pièce guide 48 par rapport aux cassettes 42.

Chaque patin de serrage 43 comporte une tête 53 de section rectangulaire de même largeur et d'épaisseur moindre que la pièce guide 48. Cette tête 53 est tournée vers l'intérieur du casier. Elle peut s'effacer du casier en pénétrant totalement dans la pièce guide 48 ou au contraire faire saillie dans le casier en direction de la paroi latérale 37. Elle se prolonge au travers de la pièce guide 48 par un corps plus étroit à section rectangulaire qui se termine par une queue 54 percée à 90° d'un trou dans lequel s'emmanche avec jeu l'axe 47.

La tête 46 de la première gâchette comporte une échelle 57 de trous qui permet d'ajuster la hauteur de fixation de l'axe 47 à celle du patin de serrage 43.

La surface de la paroi latérale 37 du casier en regard du patin de serrage 43 est revêtue d'une semelle élastique 55 qui la rend déformable élastiquement sous l'action d'une boîte poussée par le patin de serrage. Cette semelle élastique 55 est, soit encastrée dans la paroi 37 qui présente alors une dépression à son niveau, soit, comme représentée, collée en relief sur la paroi et surplombée par un guide 56 empêchant le coincement des boîtes sur son rebord supérieur.

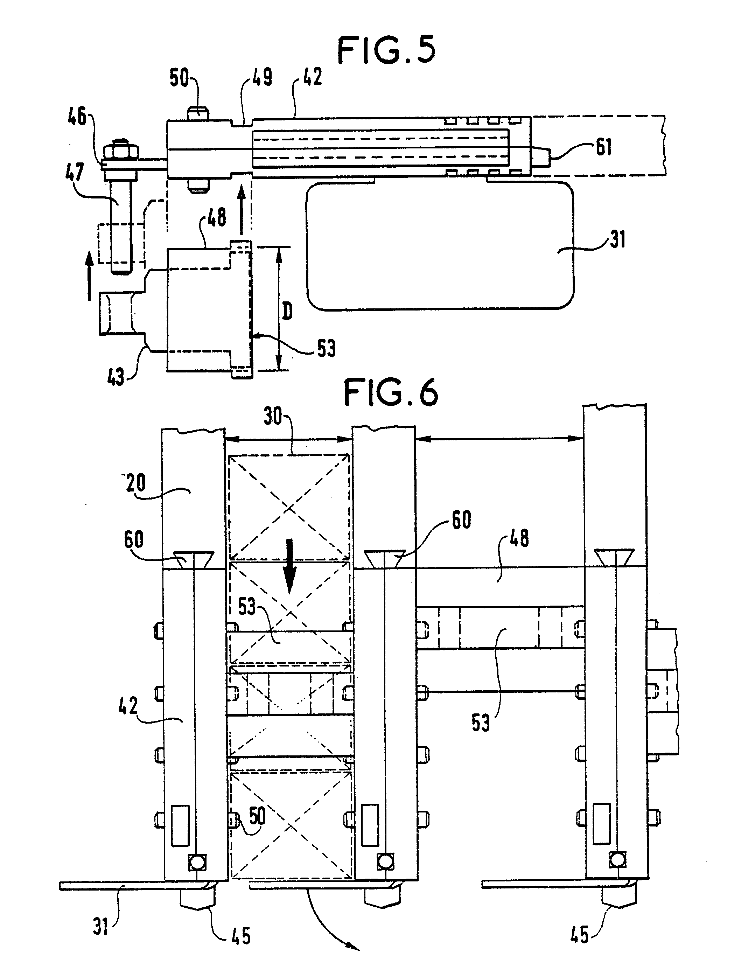

La possibilité de démontage d'un patin de serrage 43 et de sa pièce guide 48 ressort plus clairement de la figure 5 qui est une vue de dessus d'une cassette 42 avec le patin de serrage 43 qu'elle actionne et sa pièce guide 48 partiellement démontés.

La figure 6 représente, de manière partielle et schématique, les patins de serrage 43 et leurs pièces guides 48, de deux casiers consécutifs vus de l'intérieur de ces derniers. Elle montre les possibilités d'adaptation des patins de serrage 43 et de leurs pièces guides 48 à la largeur des casiers et à la hauteur des boîtes à distribuer.

Les figures 5 et 6 montrent également la fixation des cassettes 42 aux cloisons 20 par un système à queue d'aronde 60 et onglet 61.

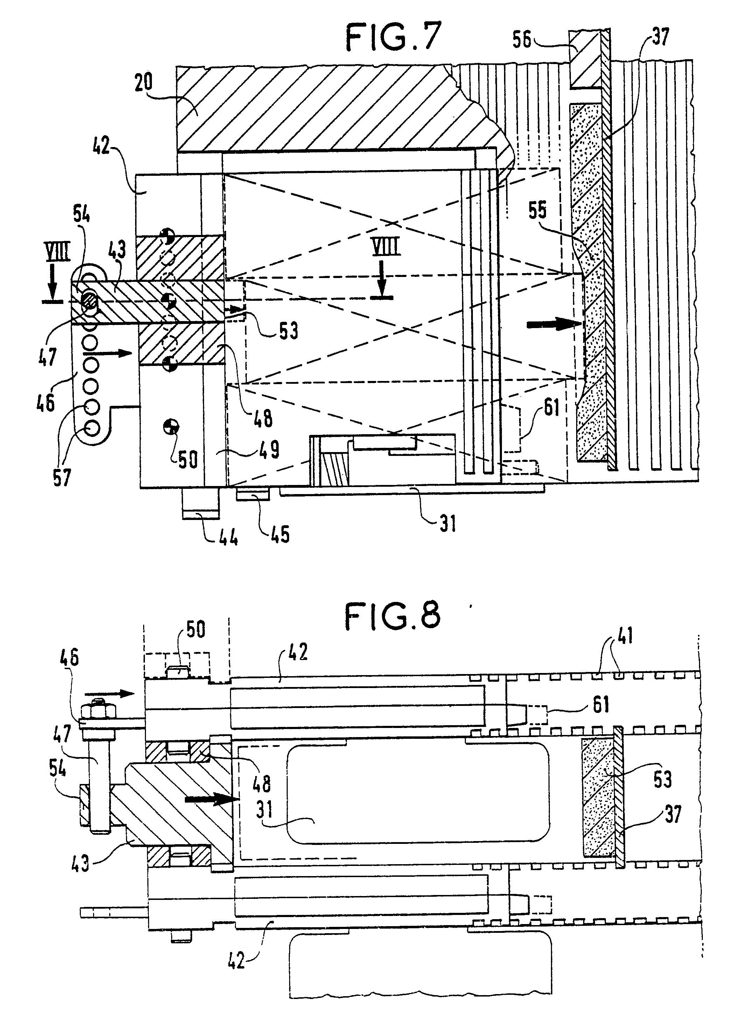

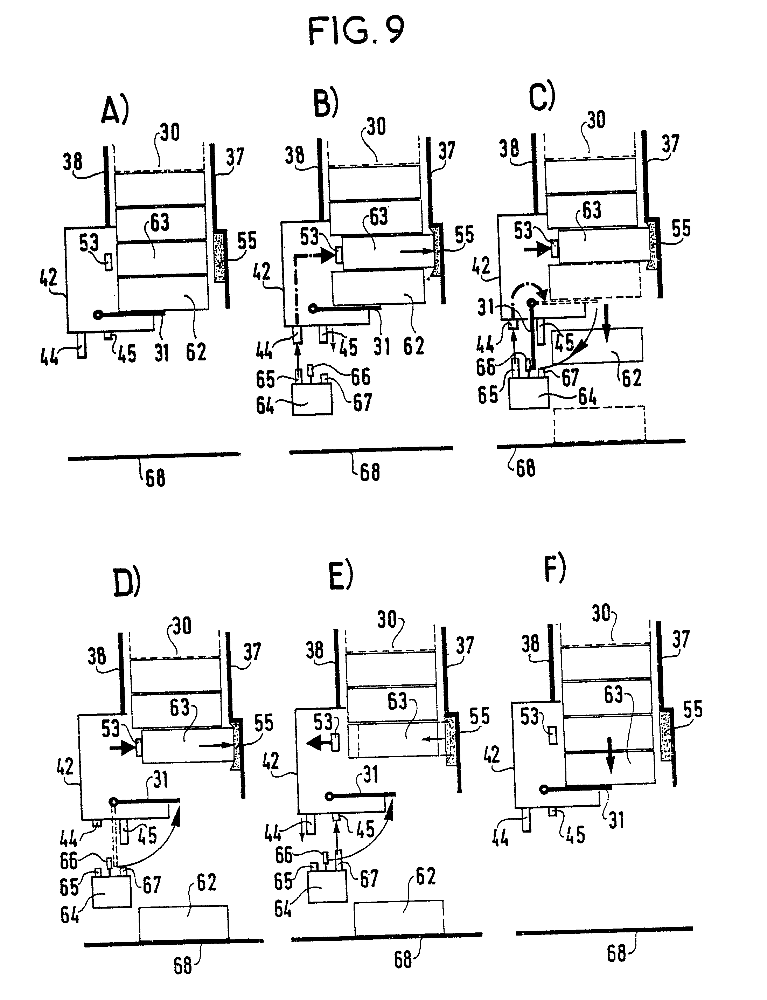

La figure 7 représente la base d'un casier vue selon une coupe verticale perpendiculaire à la plaque support 21. Elle montre l'effet de blocage obtenu sur la deuxième boîte de la pile au moyen du patin de serrage. Elle détaille également la fixation par emboîtage de la pièce guide 48 contre le flanc de la cassette 42 ainsi que la fixation avec jeu de l'axe 47 dans la queue 54 du patin de serrage 43, le trou dans lequel s'emmanche l'axe 47 étant ovalisé en direction verticale pour permettre un ajustage en hauteur plus fin que celui autorisé par l'échelle 57 de trous pratiqués dans la tête 46. Elle est complétée par la figure 8 qui est une vue en coupe selon la ligne VIII-VIII et qui montre les fixations par emboîtage de la pièce guide 48 entre les flancs en regard de deux cassettes 42 et celle de la plaquette 37 formant la paroi latérale du casier entre les flancs des cloisons 20 supportant les cassettes 42.

La figure 9 représente d'une manière très schématique la succession des mouvements de la trappe 31 et de la tête 53 du patin de serrage du mécanisme d'éjection d'un casier au cours de l'extraction de la boîte située à la base de la pile contenue dans ce casier. On distingue dans les différentes parties de cette figure :

— un casier représenté en coupe avec sa paroi latérale 37 et des joncs en caoutchouc de guidage 38,

— une pile 30 de boîtes disposée dans le casier avec ses deux boîtes inférieures indexées par 62 et 63,

— la semelle élastique 55 collée à la base de la paroi latérale 37 et la tête 53 du patin de serrage placée en regard de la semelle élastique 55 de l'autre côté de la pile 30,

— la trappe 31 disposée sous la pile 30 avec une articulation dont la direction n'a pas été respectée pour faciliter la compréhension de la figure,

— la cassette 42 renfermant les pièces d'actionnement de la trappe 31 et du patin de serrage avec ses boutons poussoirs de déclenchement 44 et d'armement 45,

— le chariot mobile desservant le casier représenté très schématiquement par un rectangle 64 surmonté de trois doigts respectivement 65, 66 et 67 figurant ses moyens d'action sur, respectivement, le bouton poussoir de déclenchement 44, la trappe 31 et le bouton poussoir d'armement 45

— et le plancher 68 conduisant à la façade du tiroir dont l'orientation par rapport au casier et au chariot mobile n'a pas été respectée pour faciliter la compréhension de la figure.

En A la cassette 42 est au repos, la trappe 31 fermée, la tête 53 du patin de serrage escamotée en dehors du casier, le bouton poussoir 44 de déclenchement sorti et celui 45 d'armement enfoncé.

En B débute le cycle des mouvements aboutissant à l'éjection de la boîte inférieure 62 de la pile. Pour déclencher ce cycle le chariot mobile 64 a été amené en arrière du casier, son doigt 65 à portée du bouton-poussoir 44 de déclenchement. Il a commencé à enfoncer, par l'intermédiaire de son doigt 65, le bouton poussoir 44 de déclenchement, ce qui a provoqué, dans un premier temps, la sortie partielle du bouton poussoir 45 d'armement et le déplacement de la tête 53 du patin de serrage à l'encontre de l'avant-dernière boîte 63 qui s'est retrouvée coincée contre la semelle élastique 55.

En C le chariot mobile 64 a terminé d'enfoncer, par l'intermédiaire de son doigt 65, le bouton poussoir 44 de déclenchement, ce qui a provoqué, dans un deuxième temps, la sortie complète du bouton poussoir 45 d'armement et l'ouverture de la trappe 31. La boîte 62 inférieure de la pile tombe par gravité sur le plancher 68 devant la lame bouteuse non représentée du chariot mobile 64 tandis que le reste de la pile est maintenu dans le casier grâce à l'action de coincement du patin de serrage sur la boîte 63.

En D le chariot mobile 64 s'est déplacé vers l'avant du casier en repoussant la boîte 62 en direction de la façade du tiroir. Son doigt 66 venu de derrière la trappe 31 a refermé cette dernière.

En E le chariot mobile 64 a légèrement poursuivi son mouvement, son doigt 66 continuant à maintenir la trappe 31 fermée. Son doigt 67 est parvenu à portée du bouton poussoir 45 d'armement qu'il a repoussé, ce qui a provoqué le blocage de la trappe 31, le retrait de la tête 53 du patin de serrage hors du casier et la sortie complète du bouton poussoir de déclenchement 44.

En F la boîte 63 libérée du patin de serrage est tombée sur la trappe 31 fermée et le chariot mobile a poursuivi son chemin vers l'avant du tiroir en poussant la boîte 62.

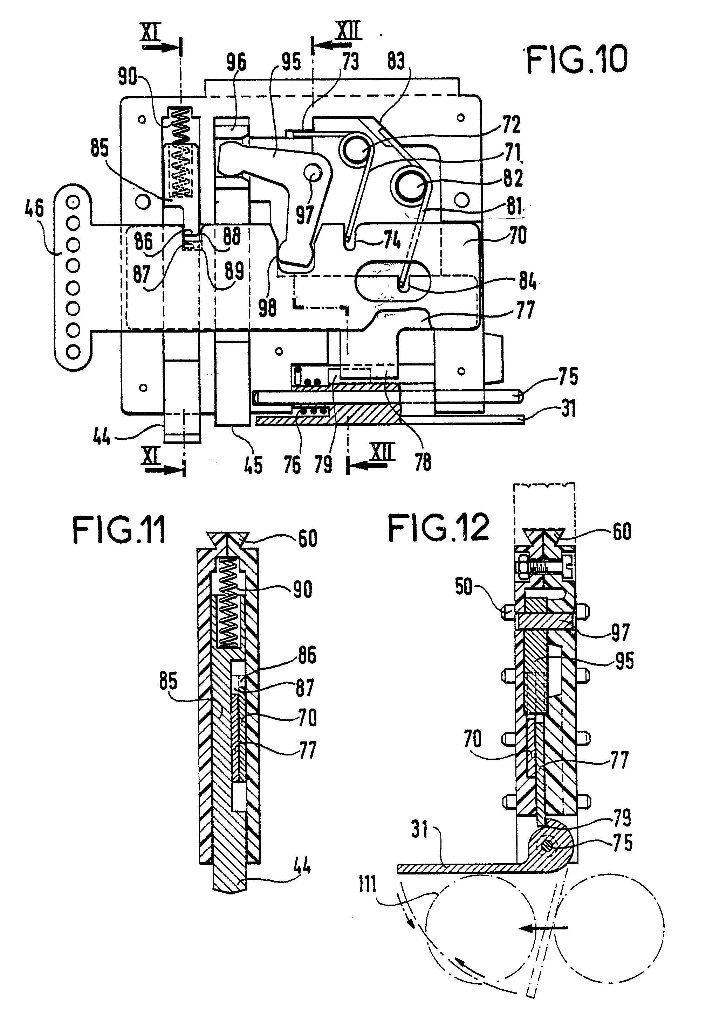

Les pièces du mécanisme d'éjection d'un casier qui sont logées dans une cassette et servent à l'actionnement de la trappe et du patin de serrage selon le cycle de mouvement précédemment décrit apparaissent aux figures 10 à 17. Elles se composent essentiellement de deux gâchettes coulissantes, l'une commandant la manœuvre du patin de serrage l'autre celle de la trappe, et de leurs moyens d'entraînement, d'armement et de déclenchement contrôlés par les boutons poussoirs de déclenchement 44 et d'armement 45.

Chaque cassette 42 comporte deux demi-boîtiers. La figure 10 respectivement 13 et 14 en représente une ouverte, l'un de ses demi-boîtiers enlevé respectivement, en position de repos, le patin de serrage étant escamoté hors du casier et la trappe fermée, en position intermédiaire de déclenchement, le patin de serrage faisant saillie dans le casier et la trappe étant encore fermée, et en position finale de déclenchement, le patin de serrage faisant saillie dans le casier et la trappe étant ouverte.

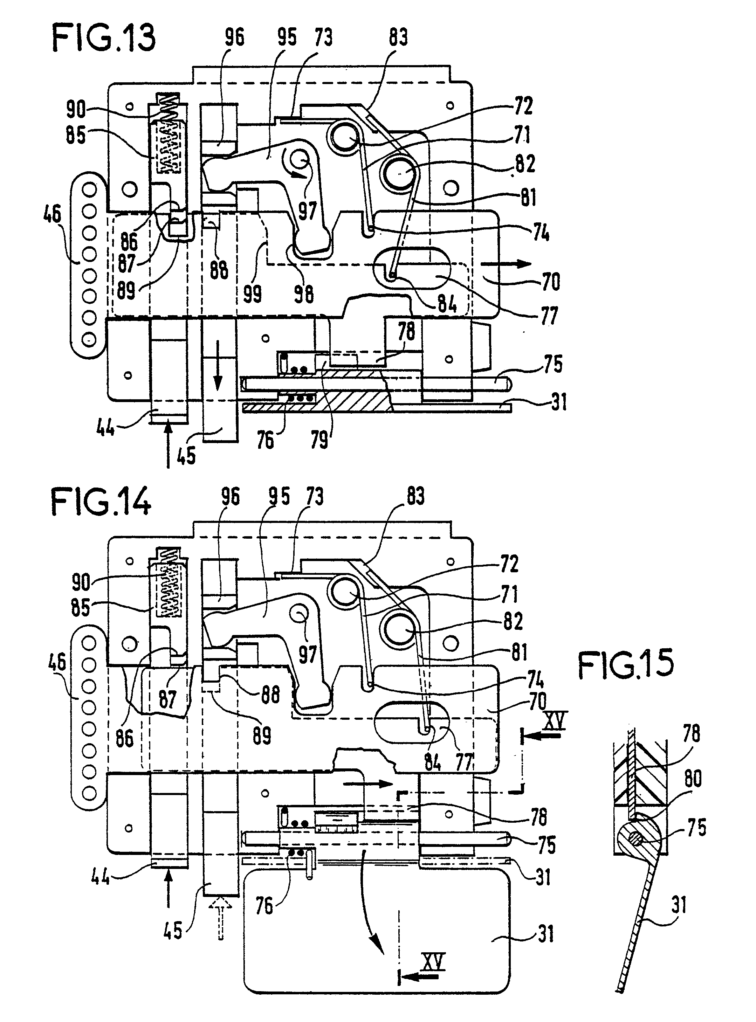

On distingue, au premier plan de ces figures, une première gâchette 70, en forme de lamelle, qui se prolonge à l'extérieur de la cassette 42 par la tête 46 actionnant le patin de serrage. Cette première gâchette 70 coulisse horizontalement (de gauche à droite sur les figures) d'une position de repos (figure 10), où elle maintient le patin de serrage escamoté dans sa pièce guide, à une position de travail (figures 13 et 14) où elle fait saillir la tête du patin de serrage à l'intérieur du casier. Elle est constamment rappelée vers sa position de travail par un ressort de torsion 71 en fil enroulé. Ce ressort de torsion 71 est monté au-dessus de la première gâchette 70 sur un ergot 72 solidaire d'un demi-boîtier de la cassette. Il prend appui par une extrémité sur un épaulement 73 situé dans un demi-boîtier de la cassette et par l'autre dans une encoche 74 taillée dans le bord supérieur de la première gâchette 70.

La trappe 31 est articulée autour d'un axe horizontal 75 fixé à la base d'une cassette entre ses deux demi-boîtiers. Elle est rappelée constamment à l'ouverture par un ressort de torsion 76 en fil enroulé placé autour de son axe 75. Elle présente, le long de son axe d'articulation 75 et dans des plans passant par celui-ci, des surfaces de butée 79 et 80 qui permettent à un doigt 78, en se plaçant devant l'une ou l'autre, soit de bloquer l'articulation de la trappe 31, soit de limiter son ouverture. Ce doigt 78 est porté par le bord inférieur d'une deuxième gâchette 77 que l'on distingue sur les figures 10, 13 et 14 au deuxième plan derrière la première gâchette 70.

Cette deuxième gâchette 77 est également en forme de lamelle. Elle coulisse horizontalement et dans le même sens que la première gâchette 70 (de gauche à droite sur les figures) d'une position de repos (figures 10 et 13), où son doigt 78 se place devant la première surface de butée 79 et bloque la trappe 31 en position de fermeture, à une position de travail (figure 14) où son doigt 79 se place devant la deuxième surface de butée 80 ne limitant plus que l'angle d'ouverture de la trappe 31.

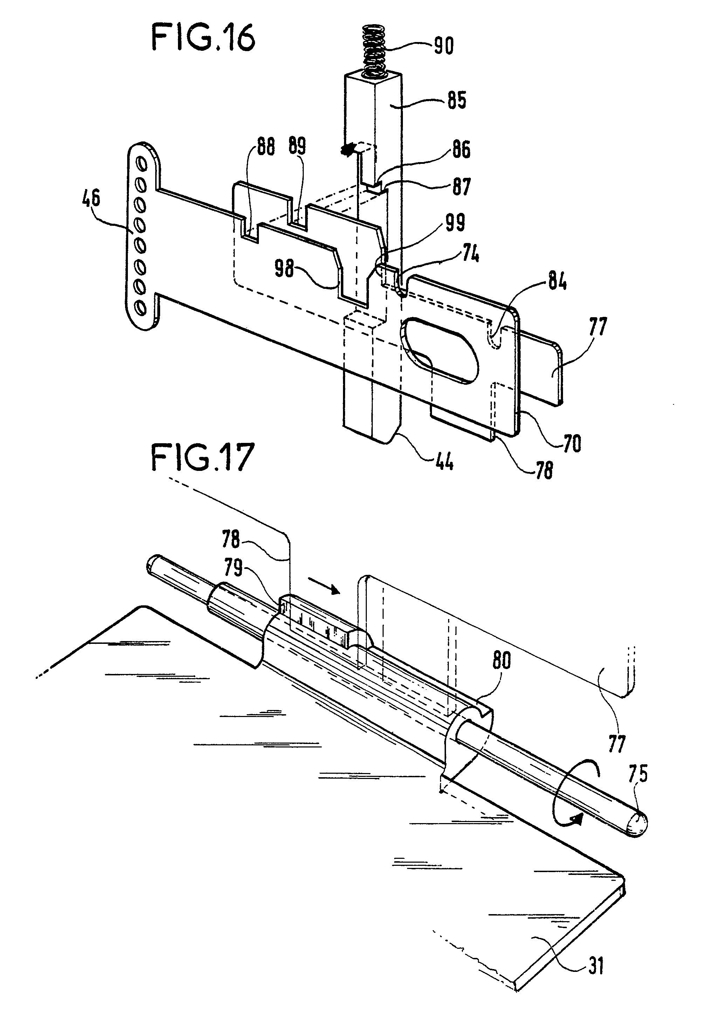

La forme de ces deux surfaces de butée 79 et 80, leur emplacement sur l'articulation de la trappe 31 et leur coopération avec le doigt 78 de la deuxième gâchette apparaissent plus clairement à la figure 17 qui est une vue partielle, en perspective, de la partie inférieure de la deuxième gâchette 77 et de la trappe 31 au voisinage de son articulation.

La deuxième gâchette 77 est, comme la première gâchette 70, constamment rappelée en position de travail par un ressort de torsion 81 (figures 10, 13 et 14) en fil enroulé. Ce ressort de torsion 81 est monté au-dessus des deux gâchettes 70 et 77 sur un ergot 82 solidaire d'un demi-boîtier de la cassette. Il prend appui par une extrémité sur un épaulement 83 situé dans un demi-boîtier de la cassette et, par l'autre, dans une encoche 84 taillée dans le bord supérieur de la deuxième gâchette 77.

Les deux gâchettes 70 et 77 sont maintenues dans leur position de repos, malgré les tractions exercées par les ressorts de torsion 71 et 81, par un moyen de verrouillage constitué par un chien 85. Ce chien 85 coulisse verticalement, derrière les deux gâchettes 70 et 77. Il est muni de deux ergots 86 et 87 superposés et tournés vers le bas, venant en prise, l'un 86 avec une encoche 88 pratiquée dans le bord supérieur de la première gâchette 70 et l'autre 87 avec une encoche 89 pratiquée dans le bord supérieur de la deuxième gâchette 77. L'ergot 86 est plus court que l'ergot 87. Lorsque les deux gâchettes 70 et 77 sont maintenues dans leur position de repos par le chien 85, il pénètre moins profondément dans l'encoche 88 de la première gâchette que ne le fait l'ergot 87 dans l'encoche 89 de la deuxième gâchette 77. De la sorte, il s'échappe en premier lors d'un déverrouillage, ce qui entraîne la libération de la première gâchette 70 avant celle de la deuxième gâchette 77. Le chien 85 est constamment rappelé vers le bas par un ressort de compression 90 appuyant sur son extrémité supérieure de manière à repousser ses ergots 86, 87 contre les bords supérieurs des gâchettes 70 et 77 et à les maintenir en prise dans les encoches 88, 89 lorsque les deux gâchettes 70 et 77 ont été amenées dans leur position de repos.

L'extrémité inférieure du chien 85 se prolonge à l'extérieur de la cassette par le bouton poussoir de déclenchement 44 qui permet son actionnement.

Les deux gâchettes 70 et 77 sont ramenées de leur position de travail à leur position de repos en les repoussant au moyen du bouton poussoir d'armement 45 par l'intermédiaire d'un levier coudé de renvoi 95 et d'une tirette verticale 96. Le levier coudé de renvoi 95 est placé au-dessus des deux gâchettes 70 et 77 sur un axe 97 solidaire des deux demi-boîtiers de la cassette. Il prend appui par une extrémité contre des épaulements verticaux 98, 99 (figure 13) découpés dans les bords supérieurs des deux gâchettes 70 et 77, et orientés en direction des positions de travail de ces dernières. Son autre extrémité est articulée par une rotule à la tête de la tirette verticale 96. Il transforme le mouvement ascendant de la tirette verticale 96 en un mouvement d'armement pour les deux gâchettes 70 et 77. La tirette verticale 96 est placée à côté du chien 85 derrière les deux gâchettes 70 et 77. Son extrémité inférieure se prolonge à l'extérieur de la cassette par le bouton poussoir d'armement 45 qui permet son actionnement.

La figure 10 qui représente une cassette 42 au repos, un demi-boîtier enlevé, est complétée par la figure 11 qui est une coupe transversale selon la ligne XI-XI dans l'axe de la gâchette et par la figure 12 qui est une coupe transversale selon la ligne brisée XII-XII. La figure 11 montre clairement la disposition côte à côte des deux gâchettes 70 et 77 et la forme étagée des deux ergots 86 et 87 du chien 85 qui permet un déclenchement en deux temps de la cassette, la libération de la première gâchette 70 entraînant le patin de serrage intervenant avant celle de la deuxième gâchette 77 libérant la trappe. La figure 12 montre clairement la disposition côte à côte des deux gâchettes 70 et 77 ainsi que la façon dont coopère le doigt 78 de la deuxième gâchette 77 avec la première surface de butée 79 pour maintenir la trappe 31 fermée.

La figure 14 qui représente une cassette 42 en position finale de déclenchement, un demi-boîtier enlevé, est complétée par la figure 15 qui est une coupe transversale selon le segment de ligne XV-XV et qui montre la manière dont coopère le doigt 78 de la deuxième gâchette 77 avec la deuxième surface de butée 80 pour limiter l'ouverture de la trappe 31.

La figure 16 est une vue en perspective éclatée qui détaille les formes des deux gâchettes 70 et 77 et du chien 85, notamment les formes étagées des deux ergots superposés 86, 87 de ce dernier.

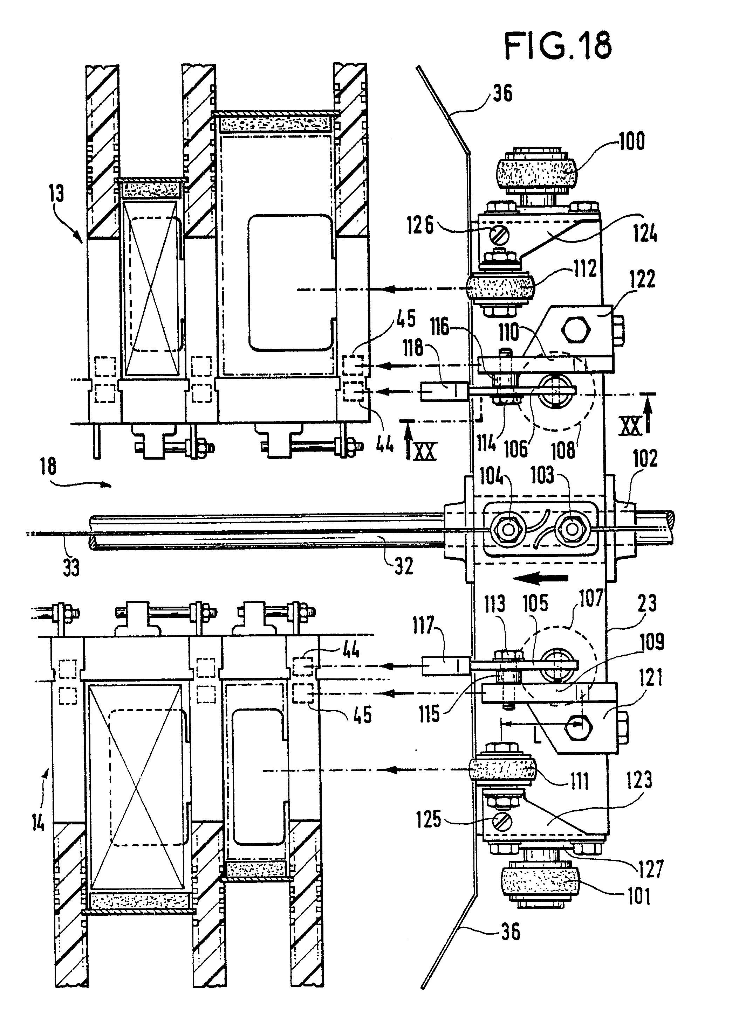

La forme des chariots mobiles qui desservent les travées de casiers ainsi que celles des moyens qui leur permettent d'actionner les boutons de déclenchement et d'armement des mécanismes d'extraction de boîtes des casiers et de refermer les trappes apparaissent dans les figures 18 à 21.

La figure 18 est une coupe horizontale partielle d'un groupe de casiers d'un tiroir, par exemple celui indexé par 9 dans la figure 2, avec ses deux travées de casiers 13, 14 dans l'exemple considéré, séparées par un couloir 18 aux parois parallèles. Elle offre une vue de dessus du chariot mobile 23 desservant les casiers du groupe et se déplaçant parallèlement au couloir 18 dans l'espace sous-jacent aux casiers.

Les cassettes 42 des mécanismes d'extraction de boîtes des casiers sont alignées par rapport aux parois du couloir 18 afin que leurs boutons de déclenchement 44 et d'armement 45 ainsi que leurs trappes 31 forment des alignements parallèles à la direction du couloir 18. Les cassettes de l'une des travées 13 du casier ont une forme symétrique de celles de l'autre travée de casiers car leurs trappes 31 doivent toutes se fermer dans le même sens, vers l'avant du tiroir, sens qui est celui des flèches tracées sur la figure 18.

Le chariot 23 est plus large que long ce qui lui donne l'aspect d'une poutre orientée perpendiculairement au couloir 18. Il repose sur le fond du tiroir contenant les casiers grâce à deux roulettes latérales 100 et 101. Il est traversé dans sa partie médiane par une douille à billes 102 dans laquelle coulisse un rail de guidage 32 en forme de barre, fixé dans le couloir 18 à égale distance des deux travées 13 et 14 de casiers. Il est tracté par un câble 33 qui, comme on l'a vu relativement à la figure 3, est monté en courroie de transmission entre des poulies motrice et de renvoi disposées aux extrémités du rail de guidage 32, dans un plan vertical, et dont les extrémités sont fixées par des boulons 103 et 104 sur le dessus du chariot 23 dans sa partie médiane.

Le chariot 23 est double et comporte, fixés sur sa face supérieure, de manière symétrique par rapport à un plan vertical passant par le rail de guidage 32 et, en s'éloignant de ce dernier :

— deux percuteurs électromagnétiques alignés chacun avec les boutons de déclenchement 44 des cassettes des mécanismes d'extraction de boîte des casiers situés du même côté du couloir 18,

— deux cames fixes 109, 110 de direction parallèle au rail de guidage 32, alignées chacune sur les boutons d'armement 45 des cassettes des mécanismes d'extraction de boîte des casiers situés du même côté du couloir 18

— et deux roulettes 111, 112 disposées dans des plans verticaux parallèles au rail de guidage et alignées chacune avec le milieu des articulations des trappes 31 des casiers situés du même côté du couloir 18.

Chaque percuteur électromagnétique est formé d'un bras de levier 105 respectivement 106 qui pivote dans le plan vertical autour d'un axe fixe intermédiaire 113 respectivement 114 fixé dans la paroi latérale de la came fixe 109 respectivement 110. Le bras de levier est placé dans l'alignement des boutons de déclenchement 44 des cassettes grâce à une rondelle entretoise 115, 116 intercalée sur son axe fixe 113, 114 entre lui et la came fixe 109, 110 qui le supporte. Il est articulé par une extrémité au noyau plongeur d'un électroaimant 107, 108. Son autre extrémité qui est libre se termine par un patin 117, 118 qui dépasse en surplomb de l'avant du chariot pour pouvoir actionner le bouton de déclenchement 44 d'une cassette sans que l'espace de dégagement en-dessous de la trappe 31 commandée par la cassette considérée ne soit obstrué par le chariot.

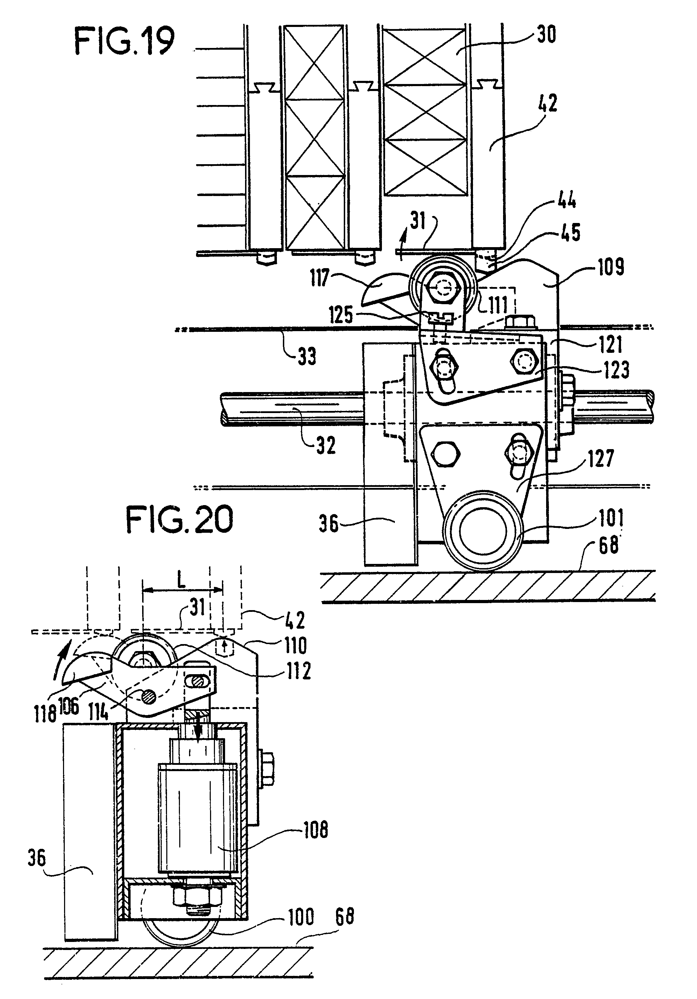

Le débattement de l'un 118 de ces patins dans le plan vertical relativement aux boutons 44 de déclenchement des cassettes ainsi que d'ailleurs sont profil, celui du bras de levier 106 auquel il appartient et de l'électroaimant 108 qui le manœuvre, apparaissent de manière détaillée dans la figure 20 qui est une coupe de profil du chariot 23 selon la ligne brisée XX-XX de la figure 18. Lorsque le percuteur est au repos, c'est-à-dire lorsque son électroaimant 108 n'est pas excité, son patin 118 est abaissé et ne vient pas au contact des boutons de déclenchement 44. Lorsqu'il est au travail, son électroaimant est excité et son patin 118 relevé (position illustrée en pointillé sur la figure 20) effleure le bas des cassettes. Le profil bombé du patin 118 évite la nécessité d'un positionnement très précis du chariot 23, l'excitation de l'électroaimant commandant le percuteur pouvant intervenir alors que le patin n'est qu'au voisinage du bouton de déclenchement 44 du casier choisi, l'enfoncement complet du bouton de déclenchement 44 étant ensuite obtenu par un mouvement du chariot.

Les électroaimants 107, 108 du chariot sont commandés à partir du tiroir grâce à un système de rails conducteurs et de frotteurs non représentés.

Les cames fixes 109, 110 sont fixées sur le chariot 23 grâce à des pieds en équerre 121, 122 qui se boulonnent à la fois sur la face supérieure et sur la face arrière du chariot. Elles sont disposées en alignement avec les boutons d'armement 45 des cassettes et présentent, comme cela apparaît plus clairement à la figure 20, un profil en V inversé avec un sommet affleurant la base des cassettes 42. Grâce à elles l'enfoncement des boutons d'armement 45 des cassettes 42 s'obtient par simple avance du chariot 23 en direction de la façade du tiroir.

Les deux roulettes 111 et 112 sont destinées à la fermeture des trappes avant l'actionnement des boutons d'armement 45 par l'intermédiaire des cames fixes 109, 110. Elles sont montées sur le dessus du chariot dans des plans verticaux parallèles au rail de guidage 32 passant par le milieu des trappes 31. Elles affleurent la base des cassettes et sont décalées vers l'avant du chariot 23 d'une distance L légèrement inférieure à la largeur de la plus petite trappe à refermer. Leurs axes sont fixés sur le dessus du chariot grâce à des pieds 123, 124 qui se boulonnent aux parois latérales du chariot et qui comportent un réglage en hauteur par vis 125, 126.

A l'avant du chariot 23 sont fixées deux lames bouteuses 36 qui permettent au chariot de repousser toutes les boîtes tombées des casiers vers l'avant du tiroir.

La figure 19 qui montre un chariot vu de profil détaille particulièrement le support réglable en hauteur 123 d'une roulette 111 servant à la fermeture des trappes 31 ainsi que le support 127, également réglable en hauteur, d'une roulette latérale 101 par lequel le chariot prend appui sur le fond 68 du tiroir.

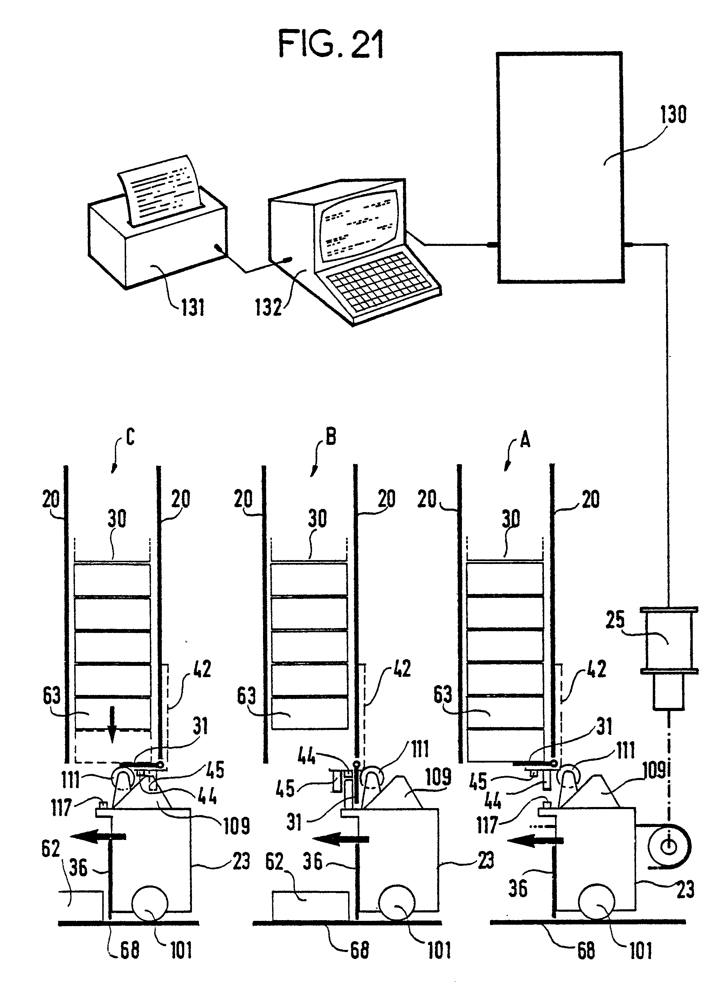

La figure 21 représente de manière très schématique la commande d'un chariot et les différentes positions qu'il prend relativement au mécanisme d'extraction de boîtes d'un casier lorsqu'il actionne puis réarme celui-ci.

Comme on l'a vu relativement à la figure 2 l'ensemble des chariots mobiles d'un tiroir est entraîné en synchronisme par un unique moteur 25. Le moteur est un moteur pas à pas ou un moteur muni d'un codeur de position angulaire permettant de repérer à tout instant la position des chariots le long des travées. Il est contrôlé ainsi que d'ailleurs les électroaimants des percuteurs par un calculateur 130. Celui-ci assure en outre la gestion du stock et est muni de périphériques d'entrée et de sortie tels qu'une imprimante 131 et une console 132 avec clavier et écran de visualisation.

La figure 21 présente trois parties A, B, C dans lesquelles on distingue :

— un casier figuré en coupe avec ses parois latérales 20,

— une pile 30 de boîtes disposées dans le casier avec ses deux boîtes inférieures indexées par 62 et 63,

— la trappe 31 disposée sous la pile 30,

— la cassette 42 renfermant les pièces d'actionnement de la trappe 31 avec ses boutons poussoirs de déclenchement 44 et d'armement 45 dont la disposition a été modifiée pour faciliter la compréhension de la figure,

— le chariot mobile figuré schématiquement par un rectangle 23 reposant sur le fond 68 du tiroir par sa roulette 101, surmonté de la came fixe 109, de la roulette 111 de fermeture de trappe et du patin de déclenchement 117,

— le plancher du tiroir 68

— et la lame bouteuse 36 placée sur la face avant du chariot.

En A débute le cycle des mouvements aboutissant à l'éjection d'une boîte de la pile 20. Le chariot 23 a été positionné par le calculateur 130 de manière à mettre le patin 117 à portée du bouton poussoir de déclenchement 44.

En B le calculateur 130 commande l'excitation de l'électroaimant manœuvrant le patin 117 alors que celui-ci est toujours à portée du bouton poussoir de déclenchement 44. Le patin 117 enfonce le bouton poussoir de déclenchement 44 ce qui a pour effet, comme cela a été indiqué relativement aux parties B et C de la figure 9, de provoquer, dans un premier temps, la sortie partielle du bouton d'armement 45 et le coincement de l'avant dernière boîte 63 de la pile 30 puis, dans un deuxième temps, la sortie complète du bouton poussoir d'armement 45, l'ouverture de la trappe et la chute de la dernière boîte 62 de la pile 30 devant le chariot, celui-ci restant en arrière du casier.

En C le calculateur 130 a supprimé l'excitation de l'électroaimant manœuvrant le patin 117 et commande l'avance du chariot 23 en direction de la face avant du tiroir 3.

Au cours de cette avance la roulette 111 vient en contact avec le dos de la trappe 31 qu'elle referme puis la came fixe 109 vient appuyer sur le bouton poussoir d'armement 45 ce qui a pour effet, comme indiqué relativement à la partie E de la figure 9, de bloquer la trappe 31 en position de fermeture, de décoincer l'avant dernière boîte 63 de la pile 30 qui tombe sur la trappe et de faire ressortir le bouton poussoir d'armement 44. En même temps le chariot 23 repousse la boîte 62 vers l'avant du tiroir.

Plusieurs boîtes peuvent être extraites de différents casiers au cours d'une seule passe des chariots le long des casiers. Dans le cas où plusieurs boîtes doivent être extraites d'un même casier on programme dans le calculateur de légers retours en arrière des chariots leur permettant de passer de la position représentée en C à la figure 21 à celle représentée en A dans cette même figure.

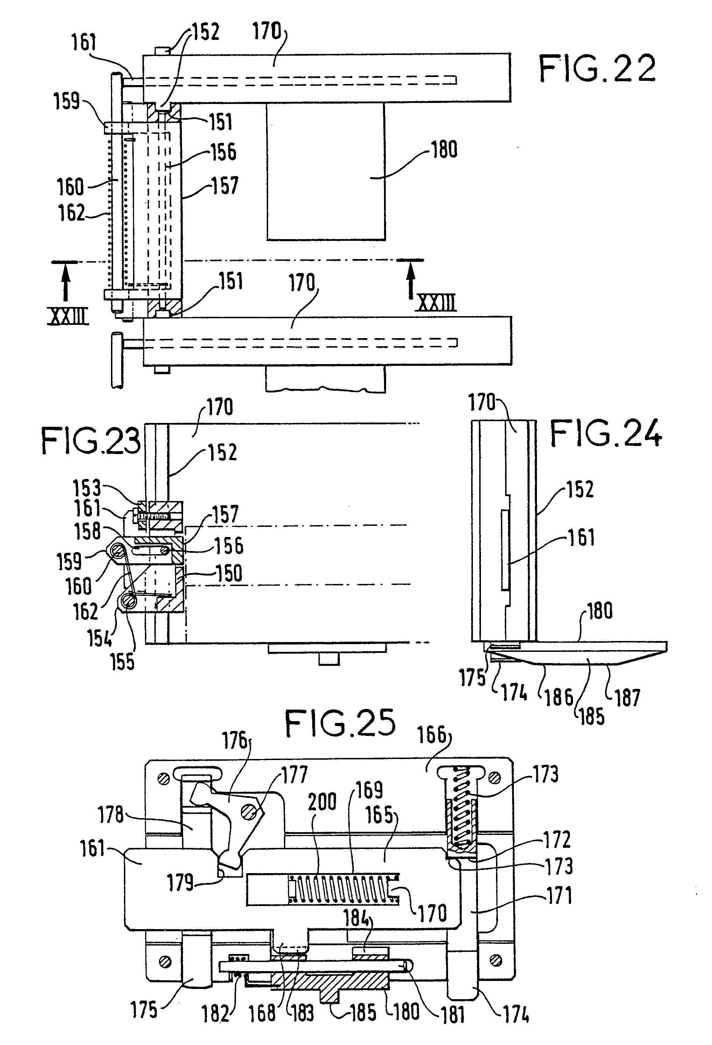

Les figures 22 et 23 illustrent une variante du patin de serrage et de sa pièce guide.

La figure 23 est une vue de dessus partiellement coupée et la figure 23 une coupe transversale selon la ligne XXIII-XXIII de la figure 22.

Dans cette variante la pièce guide a la forme d'un cadre rectangulaire vertical 150 qui s'encastre devant la base d'un casier entre les flancs de deux cassettes adjacentes 170, ses faces latérales venant au contact des cassettes 170 présentant chacune une rainure longitudinale 151 dans laquelle s'emboîtent des goujons (50 figure 4) ou une arête verticale 152 dépassant en relief des flancs des cassettes 170. Il peut coulisser verticalement entre les flancs des cassettes 170 pour permettre le réglage en hauteur du patin face à l'avant-dernière boîte du bas de la pile du casier et être bloqué en position grâce à une bride horizontale 153 légèrement plus large qui est vissée sur sa bordure supérieure du côté extérieur au casier et qui vient prendre appui de part et d'autre sur les tranches des cassettes 170. Il présente, aux extrémités de sa bordure inférieure, du côté extérieur au casier, deux oreilles verticales 154 dans lesquelles sont fixées les extrémités d'une première barre horizontale 155 d'appui de ressort. Une barre de retenue 156 est placée horizontalement au travers de l'ouverture du cadre et fixée dans les bordures verticales de ce dernier.

Le patin de serrage présente une tête plate 157 rectangulaire pénêtrant avec jeu dans l'ouverture du cadre. Cette tête est prolongée vers l'extérieur du casier par un corps de même largeur percé d'une fente horizontale 158 dans laquelle coulisse la barre de retenue 156. Le corps se termine du côté opposé à la tête 157 par deux oreilles verticales 159 disposées latéralement qui supportent une deuxième barre horizontale 160 d'appui de ressort. Cette deuxième barre d'appui 160 dépasse dissymétriquement de l'un des côtés du cadre lorsque le patin est en place dans ce dernier et vient intercepter une tête de gâchette 161 émergeant de la tranche d'une des cassettes 170 bordant le casier considéré.

Un ressort en fil bobine 162 a sa partie médiane enfilée sur la deuxième barre d'appui 160 solidaire du patin et ses extrémités enfilées sur la première barre d'appui 155 solidaire du cadre. Il est monté avec une prétorsion tendant à faire pénétrer la tête du patin à l'intérieur du casier et fournit la poussée nécessaire au blocage de l'avant-dernière boîte de la pile, l'effort de poussée n'ayant donc plus à être délivrée par le mécanisme de la cassette. En période de repos le patin de serrage est maintenu hors du casier par la poussée exercée par la tête de gâchette 161 sur l'extrémité de la deuxième barre d'appui 160. Il n'est pas nécessaire de prévoir une fixation entre la tête de gâchette 161 et le patin de serrage ce qui évite toute opération de montage après le réglage de la hauteur de sa pièce guide par rapport au casier, l'ensemble constitué par le patin de serrage, sa pièce guide et le ressort en fil bobiné étant prémonté en usine.

Les figures 24 et 25 illustrent une variante de réalisation des cassettes renfermant les mécanismes d'extraction d'objet. Cette variante est représentée de profil dans la figure 24 et de face l'un des demi-boîtiers enlevé et le mécanisme en position de repos dans la figure 25.

Dans cette variante, le mécanisme de la cassette comporte une gâchette unique 165 assurant à la fois la commande de la trappe et du patin de serrage. Cette unique gâchette 165 se distingue au premier plan de la figure 24 à l'intérieur du demi-boîtier 166. Elle a la forme d'une lamelle qui se prolonge à l'extérieur de la tranche de la cassette par une tête 161 actionnant le patin de serrage et qui comporte à sa base un doigt 168 contrôlant la trappe 180. Elle coulisse horizontalement (de gauche à droite dans la figure 25) d'une position de repos dans laquelle elle est représentée et où elle maintient la trappe 180 fermée et le patin de serrage escamoté, à une position de travail où elle provoque le serrage du patin et libère la trappe 180.

L'unique gâchette 165 est constamment rappelée vers sa position de travail par un ressort de compression en fil bobine 200. Ce ressort de compression 200 est monté dans une ouverture horizontale rectangulaire 169 à ses dimensions pratiquées dans la partie médiane de la gâchette 165. Il s'appuie sur la gâchette 165 par le bord droit de l'ouverture 169 sur lequel il est maintenu par un ergot 170 et sur des surfaces d'appui pratiquées en regard dans les demi-boîtiers en avant du bord gauche de l'ouverture 169.

L'unique gâchette 165 est maintenue dans sa position de repos malgré la traction exercée par le ressort de compression 200 par un moyen de verrouillage constitué par un chien 171 qui coulisse verticalement derrière la gâchette 165. Ce chien 171 est muni d'un ergot 172 tourné vers le bas venant en prise avec une encoche 173 pratiquée dans le bord supérieur de la gâchette 165 et est rappelé constamment vers le bas par un ressort de compression 173 appuyant sur son extrémité supérieure. L'extrémité inférieure du chien 171 se prolonge par un bouton de déclenchement 174 qui permet son actionnement.

L'unique gâchette 165 est ramenée de sa position de travail à sa position de repos en la repoussant au moyen d'un bouton poussoir d'armement 175 par l'intermédiaire d'un levier coudé de renvoi 176 pivotant au-dessus de la gâchette 165 autour d'un axe 177 solidaire des demi-boîtiers. Le levier de renvoi 176 prend appui par une extrémité dans une encoche 179 pratiquée dans le bord supérieur de la gâchette 165. Il a son autre extrémité articulée par une rotule à la tête d'une tirette verticale 177 prolongeant le bouton poussoir d'armement 175.

La trappe 180 est articulée autour d'un axe horizontal 181 fixé à la base de la cassette entre ses deux demi-boîtiers. Elle est rappelée constamment en position d'ouverture par un ressort de torsion 182 en fil enroulé placé autour d'une extrémité de son axe 181. Elle présente le long de son axe d'articulation 181 et dans un plan passant par celui-ci, des surfaces de butée 183, 184 disposées symétriquement par rapport à son plan médian de section droite orthogonal à l'axe d'articulation 181, qui permettent au doigt 168 de la gâchette 165 de bloquer l'articulation de la trappe ou de la libérer en se plaçant devant l'une des deux, ou entre les deux. Seule l'une des butées 183, 184 est utilisée. La présence des deux butées 183, 184 et leur disposition symétrique rendent indifférent le sens de montage de la trappe 180 par rapport à la cassette 170 et laissent le choix du côté de la cassete vers lequel se referme la trappe. La trappe 180 est munie, sur sa face inférieure d'une arête médiane 185 perpendiculaire à l'axe d'articulation 181 et biseautée à ses extrémités. Cette arête 185 sert de chemin de roulement à la roulette du chariot mobile qui vient refermer la trappe 180 pendant l'actionnement du bouton d'armement 175. Elle sert également au raidissement de la trappe 180.

Les boutons poussoir de déclenchement 174 et d'armement 175 sont répartis sur la tranche inférieure de la cassette de part et d'autre de l'axe d'articulation de la trappe 180 ce qui laisse une plus grande liberté pour le positionnement sur le chariot mobile de leurs moyens d'actionnement.

La cassette qui vient d'être décrite relativement aux figures 24 et 25 peut être utilisée avec les deux systèmes de patins de serrage décrits précédemment mais elle l'est de préférence avec celui représenté aux figures 22 et 23.

Dans le cas du système de patins de serrage décrit relativement aux figures 4 à 8 la tête 161 de l'unique gâchette 165 présente une échelle verticale de trous analogue à celle pratiquée sur la tête de la première gâchette de la cassette représentée à la figure 10. Le coincement de l'avant-dernière boîte du bas de la pile du casier s'obtient par un déplacement d'amplitude constante du patin de serrage en direction de la semelle élastique (55 figure 4) de la paroi opposée sous la seule action du ressort de compression (200 figure 25) qui entraîne la gâchette 165 et qui doit être calibré en conséquence. L'amplitude de ce déplacement correspond à celle du déplacement que doit effectuer le doigt 168 de la gâchette pour échapper à l'une des deux butées 183, 184 de la trappe 180.

Dans le cas du système de patin de serrage décrit relativement aux figures 22 et 23 la tête 161 de l'unique gâchette 165 vient au contact de la deuxième barre d'appui 160 solidaire du patin de serrage mais ne lui est pas fixée ce qui rend la course de la gâchette 165 indépendante de celle du patin de serrage. La force de serrage du patin est uniquement due au ressort en fil bobiné 162 enfilé sur les barres d'appui 155 et 160.

La cassette qui vient d'être décrite relativement aux figures 24 et 25 peut être actionnée à l'aide d'un chariot mobile analogue à celui représenté à la figure 18 la came 110 servant à l'enfoncement des boutons poussoir d'armement des cassettes et le percuteur électromagnétique servant à l'enfoncement des boutons poussoir de déclenchement des cassettes étant repositionnés latéralement pour venir dans les nouveaux alignements de ces boutons. Les différentes phases de fonctionnement de la cassette et les positions relatives du chariot lors de l'extraction d'un objet du casier contrôlé par la cassette sont alors celles décrites relativement aux figures 9 et 21.

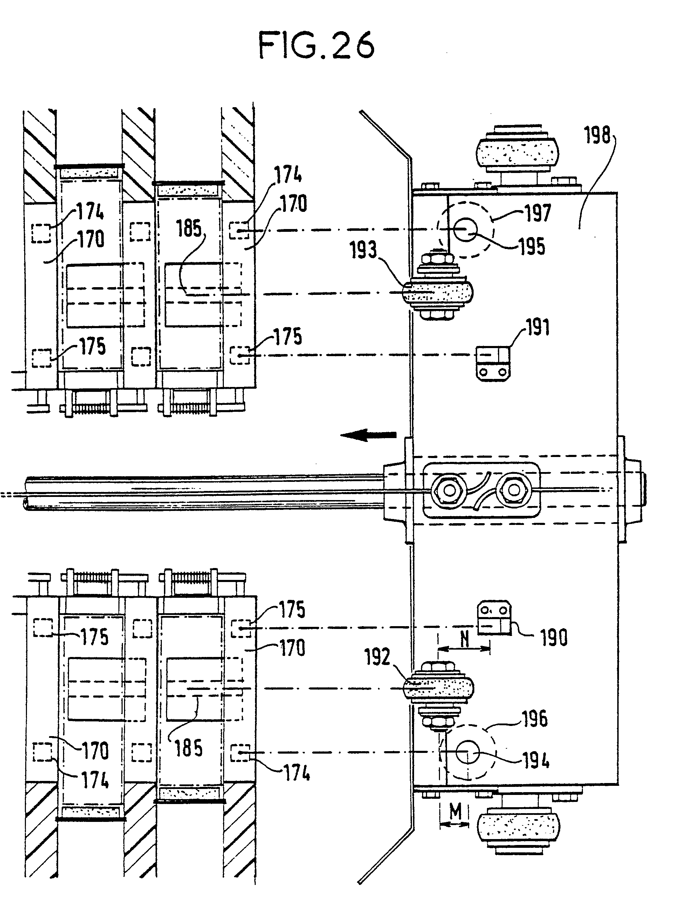

La figure 26 et une coupe horizontale partielle de deux travées de casiers d'un tiroir offrant une vue de dessus d'un chariot mobile les desservant conçu pour soulever légèrement la trappe d'une cassette lorsqu'il actionne ou réarme le mécanisme de cette dernière afin de supprimer les frottements entre les butées de la trappe et le doigt de la gâchette du mécanisme d'actionnement.

On distingue sur cette figure 26 les cassettes 170 décrites relativement aux figures 24 et 25 disposées perpendiculairement aux parois d'un couloir de manière que leurs boutons de déclenchement et d'armement 174, 175 forment des alignements parallèles à la direction du couloir. Les cassettes 170 de l'une des travées sont disposées symétriquement par rapport à celle de l'autre travée, leurs trappes se fermant toutes dans le même sens vers l'avant du tiroir d'où l'intérêt de pouvoir choisir au montage de la trappe son sens de fermeture.

Le chariot 198 a la forme d'une poutre perpendiculaire à la direction du couloir. Il se déplace au milieu de celui-ci dans l'espace sous-jacent au casier grâce aux mêmes moyens de roulement et de guidage que ceux du chariot représenté à la figure 18. Il est toujours équipé à l'avant de deux lames bouteuses et sur sa face supérieure :

— de deux percuteurs électromagnétiques placés dans les alignements des boutons de déclenchement 174 des cassettes des deux travées,

— de deux cames fixes 190, 191 parallèles à la direction du couloir, placées dans les alignements des boutons d'armement 175 des cassettes des deux travées

— et de deux roulettes 192, 193 placées dans les alignements des plans médians des trappes et, plus précisemment dans les alignements des arêtes médianes 185 des trappes.

Les roulettes 192, 193 sont placées à l'avant du chariot déterminé par rapport au sens de la flèche.

Les percuteurs électromagnétiques ne comportent plus de pédale montée au bout d'un bras de levier mais un simple bouton 194, 195 fixé à l'extrémité du noyau plongeur d'un électroaimant 196, 197. Ils sont placés en retrait par rapport aux roulettes 192, 193. Leur distance de retrait M est telle que les boutons 194, 195 viennent dans le prolongement des boutons de déclenchement 176 des cassettes 170 lorsque les roulettes 192, 194 roulent sur la moitié (186 figure 24) non biseautée et proche de la cassette considérée, de la rainure médiane 185 de la trappe 180 articulée à la cassette considérée.

Les cames fixes 190, 191 sont à une seule pente orientée vers l'avant du chariot et leur largeur est de l'ordre de celle de la moitié non biseautée de l'arête médiane 185 de la trappe 180 de la plus petite dimension. Elles sont en retrait par rapport aux boutons 194 et 195 des percuteurs électromagnétiques. Leur distance de retrait N par rapport aux roulettes 192, 193 est telle qu'elles viennent en prise avec les boutons d'armement 175 des cassettes 170 lorsque les roulettes entament la moitié (187 figure 24), non biseautée et éloignée de la cassette considérée, de la rainure médiane 185 de la trappe 80 articulée à la cassette considérée.

Avec une trappe de largeur minimale 5 cm articulée sur un axe en retrait de 0,5 cm et munie d'une arête médiane biseautée à ses extrémités sur 1 cm, on peut prendre une distance de retrait M de 1,25 cm, une distance de retrait N de 2,75 cm et une longueur pour les cames fixes 190, 191 de 1,5 cm.

Le chariot qui vient d'être décrit ouvre les trappes au cours d'un mouvement aller et les referme au cours d'un mouvement retour. Sa position de repos est à l'avant du tiroir, toutes les trappes étant fermées.

Pour ouvrir une ou plusieurs trappes des travées de casiers on commande un déplacement complet du chariot de l'avant vers l'arrière du tiroir. Lorsqu'il passe sous une cassette, sa roulette 192 ou 193 rencontre la trappe fermée 180 avant même que le bouton 194 ou 195 du percuteur ou la came fixe 190 ou 191 ne viennent en regard des boutons de déclenchement et d'armement 174 et 175. La roulette 192 ou 193 soulève légèrement la trappe 180 et soulage le doigt de la gâchette du mécanisme de la cassette, de l'effort que la trappe 180 exerçait sur lui par l'intermédiaire de l'une des butées 183 ou 184. Lorsque la roulette entame la partie non biseautée de l'arête 185 de la trappe 180, la came fixe 190 ou 191 passe au droit de la cassette, sous le bouton d'armement 175 qui, dans les hypothèses faites est hors de portée, en position enfoncée. Le bouton 194 ou 195 du percuteur parvient ensuite au droit de la cassette, sous le bouton de déclenchement 174 alors que la roulette termine la partie non biseautée de l'arête 185 de la trappe 180 et que la came fixe 190 ou 191 a déjà dépassé la tranche de la cassette et dégagé l'espace de manœuvre du bouton d'armement 175. Le percuteur est déclenché à ce moment si l'on désire l'ouverture de la trappe manœuvrée par le méca-

nisme de la cassette considérée. Le chariot peut être momentanément arrêté au cours de ce déclenchement. Sous l'action du percuteur et du bouton de déclenchement 174 la gâchette 165 du mécanisme de la cassette passe dans sa position de travail actionnant le patin de serrage et débloquant l'articulation de la trappe 180 qui est maintenue fermée par la roulette 192 ou 193 du chariot tant que celui-ci n'a pas dégagé vers l'arrière l'espace sous jacent à la trappe. Au retour le chariot referme les trappes 180 ouvertes grâce à ses roulettes 192 et 193, arme les mécanismes des cassettes grâce à ses cames fixes 190 et 191 et repousse les boîtes extraites des casiers vers l'avant du tiroir.

Avec ce mode d'actionnement qui évite les frottements du doigt 168 de la gâchette sur les butées 183, 184 de la trappe lors de la manœuvre de la gâchette on obtient une faible usure et par conséquent une grande longévité des cassettes.

Un autre avantage de ce mode de fonctionnement provient également d'un recentrage automatique des boîtes au sein de leurs piles dû au léger soulèvement des trappes pendant un aller du chariot.

On peut modifier la conception des chariots de manière qu'ils ne desservent chacun qu'une travée ou encore les réunir en une seule pièce. On peut également supprimer les couloirs entre travées.

**Revendications**

1. Dispositif pour le stockage et la distribution automatique d'objets comportant :
— des casiers (7) de stockage verticaux pour des piles (30) d'objets, lesdits casiers (7) étant disposés selon au moins un alignement horizontal (11) dit travée,
— un mécanisme d'éjection par casier procédant par coincement de l'avant-dernier objet du bas d'une pile avant la libération de l'objet du bas de pile,
— un chariot mobile (23) par travée (11) de casiers (7) se déplaçant le long de la travée (11) considérée,
— des moyens de guidage et d'entraînement de chaque chariot mobile (23),
— des premiers moyens d'actionnement des mécanismes d'éjection, solidaires de ces derniers, lesdits premiers moyens d'actionnement des mécanismes d'éjection des casiers (7) d'une travée (11) étant accessibles du chariot mobile (23) se déplaçant parallèlement à cette travée (11),
— des deuxièmes moyens d'actionnement des mécanismes d'éjection solidaires de chaque chariot mobile (23) coopérant avec lesdits premiers moyens d'actionnement des mécanismes d'éjection des casiers (7) de la travée (11) le long de laquelle se déplace le chariot mobile considéré (23),
— des moyens de contrôle et de commande des déplacements de chaque chariot mobile (23),

— des moyens de commande pour commander les deuxièmes moyens d'actionnement solidaires de chaque chariot mobile (23),
— et des moyens de collecte des objets extraits des casiers,
caractérisé en ce qu'il comporte en outre :
— des corps plats ou cassettes (42), chacun servant de logement au mécanisme d'éjection d'un casier et s'encastrant dans une découpe pratiquée à la partie inférieure d'une paroi avant ou arrière (20) du casier considéré,
— des trappes (31), une par casier, manœuvrées par les mécanismes d'éjection, chacune fermant le fond d'un casier et étant articulée à la cassette (42) du mécanisme d'éjection du casier considéré,
— et des patins de serrage (43), un par casier, manœuvrés par les mécanismes d'éjection, chacun permettant, pendant l'ouverture de la trappe (31) du casier considéré, de coincer l'avant-dernier objet de la pile (30) contre une paroi latérale (37) du casier (7).

2. Dispositif selon la revendication 1, caractérisé en ce que les moyens de collecte des objets extraits des casiers comportent, sous chaque travée de casiers, un espace de dégagement (5) débouchant en dehors du dispositif dans une goulotte (6).

3. Dispositif selon la revendication 2, caractérisé en ce que les moyens de collecte comportent en outre, pour chaque travée de casiers, une lame bouteuse (36) qui est fixée au chariot mobile (23) desservant la travée (11) considérée et qui balaye l'espace de dégagement (5).

4. Dispositif selon la revendication 1, caractérisé en ce que les casiers (7) sont répartis en groupes (8) de deux travées parallèles (11, 12) de longueurs sensiblement égales séparées par un couloir (8) sous lequel se déplacent les deux chariots mobiles qui les desservent et qui sont réunis en une seule pièce (22).

5. Dispositif selon la revendication 1, caractérisé en ce que chaque mécanisme d'éjection comporte une première et une deuxième gâchettes (70, 77) coulissantes logées côte à côte dans la cassette (42), la première gâchette (70) commandant la manœuvre du patin de serrage (43) et la deuxième (77) l'ouverture de la trappe (31).

6. Dispositif selon la revendication 5, caractérisé en ce que chaque mécanisme d'éjection comporte en outre :
— des moyens élastiques rappelant en permanence la première gâchette (70) vers une position dite de travail où elle fait saillir le patin de serrage (43) à l'intérieur du casier (7) auquel est associé le mécanisme d'extraction considéré, et la deuxième gâchette (77) vers une position également dite de travail où elle libère la trappe (31), des moyens d'armement permettant, en s'opposant à l'action des moyens élastiques, d'amener la première gâchette (70) de sa position de travail à une position dite de repos où elle escamote le patin de serrage, et la deuxième gâchette (77) de sa position de travail à une position également dite de repos où elle empêche l'ouverture de la trappe (31)

— et des moyens de verrouillage permettant de maintenir la première et la deuxième gâchette, (70, 77) dans leurs positions de repos lorsqu'elles y ont été amenées par les moyens d'armement et de les libérer de manière successive en commençant par la première (70).

7. Dispositif selon la revendication 6, caractérisé en ce que les moyens de verrouillage comportent

— un chien (85) qui coulisse dans la cassette (12) à la rencontre des gâchettes (70, 77) et qui est muni de deux ergots (86, 87) venant en prise, l'un avec une encoche (88) partiquée dans la première gâchette (70), l'autre avec une encoche (89) pratiquée dans la deuxième gâchette (77) lorsque lesdites gâchettes (70, 77) sont dans leur position de repos, l'ergot (87) coopérant avec l'encoche (89) de la deuxième gâchette (77) pénétrant plus profondément que l'autre, cela pour que la première gâchette (70) soit libérée la première lors d'un déverrouillage

— et un ressort à compression (90) repoussant le chien (85) de manière à rappeler en permanence ses ergots (86, 87) contre les gâchettes (70, 77) et à maintenir lesdits ergots (86, 87) en prise avec les encoches (88, 89) desdites gâchettes (70, 77) lorsque ces dernières sont dans leur position de repos.

8. Dispositif selon la revendication 7, caractérisé en ce que les premiers moyens d'actionnement comportent un bouton poussoir (44) prolongeant le chien (85) à l'extérieur de la cassette (42) de chaque mécanisme d'extraction et permettant, en le repoussant, d'écarter ses ergots (86, 87) des encoches (88, 89) des gâchettes (70, 77) et de libérer ces dernières.

9. Dispositif selon la revendication 8, caractérisé en ce que les deuxièmes moyens d'actionnement portés par un chariot mobile comportent un percuteur électromagnétique disposé sur un chariot de manière à venir en vis-à-vis du bouton poussoir (44) prolongeant le chien (85) du mécanisme d'extraction d'un casier sans que le chariot ou ses éléments ne viennent dans l'espace de dégagement situé sous la trappe (31) du casier.

10. Dispositif selon la revendication 6, caractérisé en ce que les deux gâchettes (70, 77) disposées dans la cassette (42) coulissent parallèlement l'une à l'autre et dans le même sens pour passer de leur position de travail à leur position de repos ou inversement.

11. Dispositif selon la revendication 10, caractérisé en ce que les moyens d'armement comportent :

— un levier coudé de renvoi (95) pivotant autour d'un axe fixe (37) solidaire de la cassette (42) et prenant appui par une extrémité sur des épaulements (98, 99) pratiqués dans les gâchettes (70, 77) et orientés en direction des positions de travail de ces gâchettes (70, 77) et par l'autre extrémité sur une tirette (96)

— et ladite tirette (96) coulissant perpendiculairement aux gâchettes (70, 77).

12. Dispositif selon la revendication 11, caractérisé en ce que les premiers moyens d'actionnement comportent un bouton poussoir (45) prolongeant l'extrémité libre de la tirette (96) à l'extérieur de la cassette (42) et permettant, en le repoussant, d'exercer sur les gâchettes (70, 77) par l'intermédiaire de la tirette (96) et du levier de renvoi (95) une force s'opposant à celle des moyens élastiques de manière à ramener lesdites gâchettes (70, 77) à leur position de repos.

13. Dispositif selon la revendication 12, caractérisé en ce que les deuxièmes moyens d'actionnement portés par un chariot mobile comportent une came fixe (109) qui au cours du déplacement du chariot intercepte le bouton poussoir (45) prolongeant la tirette (96) et le repousse à l'intérieur de la cassette (42).

14. Dispositif selon la revendication 13, caractérisé en ce que les deuxièmes moyens d'actionnement portés par un chariot mobile comportent au moins une roulette (111) qui au cours du déplacement du chariot referme la trappe (31) et la maintient en position fermée au moment où la came intercepte le bouton poussoir (45) prolongeant la tirette (96).

15. Dispositif selon la revendication 5, dans lequel la trappe (31) est articulée à la cassette (42) au moyen d'un axe horizontal (75) et en ce que les deux gâchettes (70, 77) coulissent dans la cassette (42) parallèlement à cet axe (75) et dans le même sens pour passer de leur position de travail à leur position de repos ; caractérisé en ce que la trappe (31) présente deux surfaces de butée (79, 80) au voisinage de son axe d'articulation (75), l'une (79) de fermeture, l'autre (80) d'ouverture qui coopèrent avec un doigt (78) de la deuxième gâchette pour empêcher l'ouverture de la trappe (31) lorsque la deuxième gâchette (77) est en position de repos et pour limiter cette ouverture lorsque la deuxième gâchette (77) est en position de travail.

16. Dispositif selon la revendication 1, caractérisé en ce que le patin de serrage (43) coulisse dans une pièce guide (48) formant entretoise, placée entre les parties basses des flancs (20) d'un casier (7), contre la cassette (42) du mécanisme d'extraction associé au casier (7) considéré.

17. Dispositif selon les revendications 5 et 16, caractérisé en ce que la première gâchette (70) se prolonge en dehors de la cassette (42) du mécanisme d'extraction par une tête (46), coulisse parallèlement au patin de serrage (43) et est fixée mécaniquement à ce dernier grâce à un axe (47) disposé à angle droit et boulonné dans sa tête (44).

18. Dispositif selon la revendication 16, caractérisé en ce que la pièce guide (48) est fixée par emboîtement entre les parties basses des flancs (20) d'un casier constituées par les cassettes (42) de deux mécanismes d'extraction, les faces d'une cassette (42) d'un mécanisme d'extraction et les parties en regard d'une pièce guide (48) comportant des formes d'emboîtage complémentaires dans la direction verticale permettant le réglage en hauteur, par petits pas, de la position de la pièce guide (48).

19. Dispositif selon la revendication 18, caractérisé en ce que lesdites surfaces d'emboîtage complémentaires comportent :

— sur le flanc d'une cassette (42) d'un mécanisme d'extraction une rainure verticale (49) et un ensemble de goujons (50) disposés selon une ligne verticale et régulièrement espacés

— et, sur chaque flanc de la pièce guide venant en regard d'une cassette (42) d'un mécanisme d'extraction, une arête verticale (51) de section complémentaire à celle de la rainure (49) et des évidements (52) du diamètre des goujons (50) répartis sur une ligne verticale régulièrement espacés avec un pas sous-multiple de celui séparant les goujons (50).

20. Dispositif selon la revendication 1, caractérisé par le fait que chaque casier (7) vertical d'un alignement (11) est constitué par des cloisons verticales (20), amovibles, fixées par la tranche, avec un écartement réglable, à une plaque support dorsal verticale (21).

21. Dispositif selon la revendication 20, caractérisé en ce que ladite paroi latérale (37) de chaque casier (7) est amovible et fixée entre les cloisons (20), devant la plaque dorsale verticale (21), à une distance ajustable de cette dernière.

22. Dispositif selon la revendication 1, caractérisé en ce que la surface de la paroi latérale (37) d'un casier (7), qui est en vis-à-vis du patin de serrage, est déformable élastiquement.

23. Dispositif selon la revendication 22, caractérisé en ce que la partie de la paroi latérale (37) d'un casier (7) qui est en vis-à-vis du patin de serrage (43) est revêtue d'une semelle élastique (55).

24. Dispositif selon la revendication 1, caractérisé en ce que les casiers (7) sont répartis en plusieurs travées parallèles de longueurs sensiblement égales desservies par des chariots solidaires mécaniquement les uns des autres se déplaçant dans un espace sous-jacent aux casiers constitué par la réunion des espaces de dégagement (5).

25. Dispositif selon la revendication 1, dans lequel les trappes (180) sont articulées à la base des cassettes (170) des mécanismes d'éjection et où les patins de serrage (157) sont disposés latéralement entre les flancs de deux cassettes consécutives (170), caractérisé en ce que le mécanisme d'éjection comporte :

— une gâchette (165) coulissant latéralement dans une cassette (170) entre une position de repos et une position de travail, son sens de déplacement de la position de repos vers la position de travail coïncidant avec le sens de pénétration du patin de serrage (157) dans le casier auquel est associé le mécanisme d'extraction considéré, et présentant, d'une part une tête (161) dépassant latéralement de la tranche de la cassette (170) du côté du patin de serrage (157) et manœuvrant ce dernier et, d'autre part, un doigt (168) dirigé vers la base de la cassette (170) en direction de l'articulation de la trappe (180), coopérant en position de repos avec une butée (183, 184) de la trappe (180) pour bloquer la fermeture de cette dernière et échappant à ladite butée (183, 184) en position de travail pour libérer la fermeture de la trappe (180),

— un moyen élastique rappelant constamment la gâchette (165) en position de travail,

— un moyen d'armement manœuvrable à l'extérieur de la cassette (170) qui, en s'opposant à l'action du moyen élastique, permet d'amener la gâchette (165) à sa position de repos,

— et un moyen de déclenchement qui maintient la gâchette (165) dans sa position de repos lorsqu'elle y a été amenée par le moyen d'armement et qui est libérable de l'extérieur de la cassette (170).

26. Dispositif selon la revendication 1, dans lequel les patins de serrage (157) coulissent en direction des casiers dans des pièces guides, caractérisé en ce que les patins de serrage (157) sont constamment repoussés en direction des casiers par des ressorts (162) s'appuyant entre eux et les pièces guides.

27. Dispositif selon la revendication 1, dans lequel les trappes (180) sont fixées à la base des cassettes (170) par un axe d'articulation (181), caractérisé en ce que lesdites trappes comportent sur leurs faces inférieures une arête médiane (185) perpendiculaire à leur axe d'articulation (181) et biseautée à chacune de ses extrémités.

28. Dispositif selon la revendication 25, caractérisé en ce que chaque trappe (180) présente deux butées (183, 184) disposées dans un même plan aux deux extrémités de son articulation, le doigt (168) de la gâchette du mécanisme d'extraction de la cassette (170) à laquelle est articulée la trappe (180) considérée coopérant indifféremment avec l'une ou l'autre des butées (183, 184) selon le sens de montage de la trappe (180) par rapport à ladite cassette (170).

29. Dispositif selon la revendication 1, caractérisé en ce que les deuxièmes moyens d'actionnement comportent une roulette (192, 193) portée par le chariot (190) maintenant les trappes (180) fermées et les soulevant légèrement lorsque les premiers moyens d'actionnement des mécanismes d'éjection sont à portée du chariot (180).

### Claims

1. A device for storing and automatically dispensing articles, comprising :

— partitions (7) for vertically storing stacks (30) of articles, these partitions (7) being disposed along at least one horizontal alignment (11) called « bay »,

— one ejection mechanism for each partition which proceeds by jamming the lowest but one article of the stack before releasing the lowest article of the stack,

— a movable carriage (23), one for each bay (11) of partitions, which displaces itself along the respective bay (11),

— guiding and drawing means for each movable carriage (23),

— first means for actuating the ejection mechanisms and locked therewith, these first means for actuating the ejection mechanisms of the partitions (7) of one bay (11) being accessible from the movable carriage (23) which moves parallely to that bay (11),

— second means for actuating the ejection mechanisms, locked with the movable carriage (23) and cooperating with the first means for actuating the ejection mechanisms of the partitions (7) of the bay (11) along which the considered carriage (23) moves,

— control and command means for the displacement of the movable carriage (23),

— means for commanding the second actuation means which are locked to each movable carriage (23),

— and means for collecting articles which are extracted from the partitions, characterized in that it further comprises :

— flat bodies or boxes (42) each being able to accomodate the ejection mechanism of a partition and fitting in a cut-out made in the lower part of a front or rear wall (20) of the considered partition,

— traps (31), one for each partition, which are operated by the ejection mechanisms and each of which permits to jam the lowest but one article of the stack (30) against a lateral wall (37) of the partition (7) as long as the trap (31) of the respective partition is open.

2. A device according to claim 1, characterized in that the means for collecting the articles after extraction from the partitions comprise an evacuation space (5) under each bay of partitions which clears to the outside of this device by a spout (6).

3. A device according to claim 2, characterized in that the collecting means further comprise a push strip (36) für each bay of partitions which is mounted on the movable carriage (23) of the considered bay (11) and which scans the evacuation space (5).

4. A device according to claim 1, characterized in that the partitions (7) are divided into groups (8) of two parallel bays (11, 12) having perceptively equal lengths and separated by a corridor (8) under which the two movable carriages of the bays move along, the two carriages being united to constitute a unique piece (22).

5. A device according to claim 1, characterized in that each ejection mechanism comprises a first and a second sliding pawl (70, 77), these pawls being accomodated side by side in the box (42), the first pawl (70) commanding the operation of the jamming shoe (43) whereas the second pawl (77) commands the opening of the trap (31).

6. A device according to claim 5, characterized in that each ejection mechanism further comprises :

— elastic means which permanently draw the first pawl (70) to a working position in which the jamming shoe (43) projects into the partition (7) to which the considered extraction mechanism is associated, and the second pawl (77) into a working position in which this pawl releases the trap (31),

— setting means which by their opposed action to the elastic means put the first pawl (70) from its working position to its rest position in which the jamming shoe is withdrawn, and which put the second pawl (77) from its working position to its rest position in which this pawl prohibits the opening of the trap (31),

— and locking means holding the first and the second pawl (70, 77) in their rest position after having been put into this position by the set means, and releasing these pawls one after the other, the first pawl (70) being released first.

7. A device according to claim 6, characterized in that the locking means comprise

— a catch (85) which slides in the box (12) when meeting the pawl (70, 77) and which bears two stops (86, 87) which engage with a slot (88) in the first pawl (70) or with a slot (89) in the second pawl (77) respectively, if these pawls (70, 77) are in their rest position, the stop (87) which cooperates with the slot (89) of the second pawl (77) entering deeper than the other stop in order to release the first pawl (70) at first during the unlocking operation,

— and a compression spring (90) which acts on the catch (85) in such a way that its stops (86, 87) are permanently urged against the pawls (70, 77) and that these stops (86, 87) remain in contact with the slots (88, 89) of these pawls (70, 77) when the pawls are in their rest position.

8. A device according to claim 7, characterized in that the first means for actuating the ejection mechanisms comprise a press button (44) which constitutes a prolongation of the catch (85) to the outside of the box (42) of each extraction mechanism and which withdraws the stops (86, 87) from the slots (88, 89) of the pawls (70, 77) and releases the latters when being pushed down.

9. A device according to claim 8, characterized in that the second means for actuating the ejection mechanisms which are mounted on the movable carriage comprise an electromagnetic hammer which is disposed on a carriage in such a way that it comes into a face to face position with the press button (44) which prolongates the catch (85) of the extraction mechanism of a partition without that the carriage or its elements project into the evacuation space which is situated under the trap (31) of the partition.

10. A device according to claim 6, characterized in that the two pawls (70, 77) which are disposed in the box (42) slide along two parallel axes and in the same direction when passing from the working position to their rest position and vice versa.

11. A device according to claim 10, characterized in that the set means comprise :

— a bent return lever (95) which pivots around a fast axis (37) which is secured to the box (42), one end of the lever being supported by shoulders (98, 99) which are provided on the pawls (70, 77) and which are directed to the working positions of these pawls (70, 77), whereas the other end of the lever is supported on a drawing member (96),

— and said drawing member (96) which slides perpendicularly to the pawls (70, 77).

12. A device according to claim 11, characterized in that the first means for actuating the ejection mechanisms comprise a press button (45) which constitutes the prolongation of the free end of the drawing member (96) outside the box (42) and which permits, when pushed down, to apply a force opposing to the elastic means on the pawls (70, 77) via the drawing member (96) and the return lever (95) in such a way, that the pawls (70, 77) are returned to their rest position.

13. A device according to claim 12, characterized in that the second means for actuating the ejection mechanisms which are mounted on the movable carriage comprise a fixed cam (109) which intercepts during the carriage displacement the press button (45) which constitutes the prolongation of the drawing member (96) and which pushes this button back into the box (42).

14. A device according to claim 13, characterized in that the second means for actuating the ejection mechanisms which are mounted on the movable carriage comprise at least one roller (111) which closes the trap (31) during the displacement of the carriage and which maintains the trap closed as long as the cam intercepts the press button (45) which constitutes the prolongation of the drawing member (96).

15. A device according to claim 5, in which the trap (31) is pivotely mounted at the box (42) by means of a horizontal axis (75) and in which the two pawls (70, 77) slide parallelly to that axis (75) in the box (42) and in the same direction when passing from the working position to the rest position, characterized in that the trap (31) presents two stop surfaces (79, 80) in the vicinity of the pivot axis (75), one stop (79) being a closing stop and the other (80) being an opening stop, cooperating respectively with a finger (78) of the second pawl in order to retain the trap (31) from opening when the second pawl (77) is in the rest position, and to limit this opening when the second pawl (77) is in its working position.

16. A device according to claim 1, characterized in that the jamming shoe (43) slides in a guide piece (48) which constitutes a distance piece and which is placed between the lower part of the sides (20) of a partition (7) against the box (42) of the extraction mechanism associated to the considered partition (7).

17. A device according to claims 5 and 16, characterized in that the first pawl (70) is prolongated outside of the box (42) of the extraction mechanism by means of a head (46) which slides parallelly to the jamming shoe (43) and which is mechanically locked to this shoe via an axis (47) disposed at right angle thereto and screwed into its head (44).

18. A device according to claim 16, characterized in that the guide piece (48) is nested between the lower part of the partition sides (20) constituted by the boxes (42) of two extraction mechanisms, the faces of one box (42) of an extraction mechanism and the corresponding parts of a guide piece (48) comprising complementary nesting forms in the vertical direction which measure enables to regulate the mounting height of the guide piece (48) by small steps.

19. A device according to claim 18, characterized in that the complementary nesting surfaces comprise

— on one side of a box (42) of an extraction mechanism a vertical groove (49) and a set of studs (50) disposed along a vertical line and regularly distanced,

— and on each guide piece side facing a box (42) of an extraction mechanism a vertical edge (51) the section of which is complementary to that of the groove (49), and holes (52) of the same diameter as the studs (50) which holes are arranged in regular distances along a vertical line, their distance being a submultiple of the distance between the studs (50).

20. A device according to claim 1, characterized in that each vertical partition (7) of a bay (11) is constituted by vertical walls (20) which can be withdrawn and which are fixed by their edge with adjustable clear space to a vertical rear support plate (21).

21. A device according to claim 20, characterized in that the side wall (37) of each partition (7) can be withdrawn and is fixed between the walls (20) in front of the vertical rear plate (21) at a distance from the latter which is adjustable.

22. A device according to claim 1, characterized in that the surface of the side wall (37) of a partition which faces the jamming shoe can be elastically deformed.

23. A device according to claim 22, characterized in that the part of the lateral wall (37) of a partition (7) which faces the jamming shoe (43) is covered with an elastic sole (55).

24. A device according to claim 1, characterized in that the partitions (7) are arranged in several parallel bays of perceptively equal lengths, the carriages of these bays being mechanically linked one to the other and moving conjointly in the space underlying the partitions, this space being constituted by the unification of the evacuation spaces (5).

25. A device according to claim 1, in which the traps (180) are pivotedly mounted at the base of the boxes (170) of the ejection mechanisms, and in which the jamming shoes (157) are disposed laterally between the sides of two consecutive boxes (170), characterized in that the ejection mechanism comprises

— a pawl (165) which slides laterally in the box (170) between a rest position and a working position, the displacement direction between the rest position and the working position coinciding with the penetration direction of the jamming shoe (157) into the partition to which the considered extraction mechanism is associated, said pawl having on the one hand a head (161) which projects laterally over the edge of the box (170) on the side of the jamming shoe (157) and which operates the latter, and presents on the other hand a finger (168) which is directed to the base of the box (170) in the direction of articulation of the trap (180), this finger cooperating in the rest position with a stop (183, 184) of the trap (180) and locking the closed trap whereas it becomes clear from the stop (183, 184) in its working position and releases the closed trap (180),

— an elastic means which draws the pawl (165) constantly into the working position,

— a set means which can be operated from outside the box (170) and which enables the pawl (165) to return to the rest position inspite of the elastic means,

— and a release means which keeps the pawl (165) in its rest position when it has been put into this position by the set means, whereby the release means can be released from outside the box (170).

26. A device according to claim 1, in which the jamming shoes (157) slide in the direction of the partitions in guide pieces, characterized in that the jamming shoes (157) are constantly pushed by springs (162) in the direction of the partitions, these springs being interposed between these shoes and the guide pieces.

27. A device according to claim 1, in which the traps (180) are fixed at the base of the boxes (170) by means of a pivot axis (181), characterized in that these traps comprise a middle edge (185) on their lower faces, this edge being perpendicular to the pivot axis (181) and being chamfered at both ends.

28. A device according to claim 25, characterized in that each trap (180) presents two stops (183, 184) disposed in one plane at both ends of its pivot axis, the finger (168) of the pawl of the extraction mechanism of the box (170) to which the considered trap (180) is pivotedly mounted cooperating indifferently with one or the other stop (183, 184) according to the mounting direction of the trap (180) with respect to said box (170).

29. A device according to claim 1, characterized in that the second means for actuating the ejection mechanisms comprise a roller (192, 193) which is mounted on the carriage (190) and which maintains the trap (180) closed, thereby slightly lifting the traps when the first means for actuating the ejection mechanisms are in the range of the carriage (180).

## Ansprüche

1. Vorrichtung zur Lagerung und automatischen Ausgabe von Gegenständen, die aufweist :

— senkrechte Lagerfächer (7) für Stapel (30) von Gegenständen, wobei die Fächer (7) mindestens in einer waagerechten Fächerreihe (11) angeordnet sind,

— einen Ausgabemechanismus pro Fach, durch den der zweitunterste Gegenstand eines Stapels vor der Freigabe des untersten Gegenstands des Stapels eingeklemmt wird,

— einen beweglichen Wagen (23) pro Fächerreihe (11), der sich entlang der betrachteten Fächerreihe (11) bewegt,

— Führungs- und Antriebsmittel für jeden beweglichen Wagen (23),

— erste Betätigungsmittel für die Ausgabemechanismen, die mit diesen fest verbunden sind, wobei die ersten Betätigungsmittel der Ausgabemechanismen der Fächer (7) einer Reihe (11) vom sich parallel zu dieser Reihe (11) fortbewegenden beweglichen Wagen (23) erreichbar sind,

— zweite Betätigungsmittel für die Ausgabemechanismen, die mit jedem beweglichen Wagen (23) fest verbunden sind und mit den ersten Betätigungsmitteln der Ausgabemechanismen der Fächer (7) der Reihe (11) zusammenwirken, entlang der der betrachtete bewegliche Wagen (23) sich fortbewegt,

— Kontroll- und Steuermittel für die Bewegungen jedes beweglichen Wagens (23),

— Steuermittel, um die zweiten Betätigungsmittel, die mit jedem beweglichen Wagen (23) fest verbunden sind, zu steuern,

— und Mittel zum Sammeln der aus den Fächern entnommenen Gegenstände, dadurch gekennzeichnet, daß die Vorrichtung außerdem enthält :

— flache Körper oder Kassetten (42), die je für die Aufnahme des Ausgabemechanismus eines Fachs dienen und in einen Ausschnitt hineinpassen, der im unteren Teil einer Vorderwand oder Rückwand (20) des betrachteten Fachs vorhanden ist,

— Klappen (31), und zwar eine pro Fach, die von den Ausgabemechanismen betätigt werden und den Boden der einzelnen Fächer verschließen sowie an der Kassette (42) des Ausgabemechanismus des betrachteten Fachs gelenkig gelagert sind,

— und Spanngleitstücke (43), und zwar eines pro Fach, die von den Ausgabemechanismen betätigt werden und während der Öffnung der Klappe (31) des betrachteten Fachs den vorletzten Gegenstand des Stapels (30) gegen eine Seitenwand (37) des Fachs (7) einspannen.

2. Vorrichtung nach Anspruch 1, dadurch gekennzeichnet, daß die Mittel zum Sammeln der aus den Fächern entnommenen Gegenstände unter jeder Fächerreihe einen Freiraum (5) aufweisen, der außerhalb der Vorrichtung in eine Sammelrinne (6) mündet.

3. Vorrichtung nach Anspruch 2, dadurch gekennzeichnet, daß die Sammelmittel außerdem für jede Fächerreihe ein Stoßplättchen (36) enthalten, das am beweglichen Wagen (23), der die betrachtete Fächerreihe (11) bedient, befestigt ist, und den Freiraum überstreicht.

4. Vorrichtung nach Anspruch 1, dadurch gekennzeichnet, daß die Fächer (7) in Gruppen (8) von zwei parallelen Fächerreihen (11, 12) aufgeteilt sind, deren Längen im wesentlichen gleich sind und die durch einen Gang voneinander getrennt sind, wobei die beiden beweglichen Wagen, die diese Reihen bedienen, unter dem Gang (8) entlangbewegt werden und aus einem gemeinsamen Bauteil (22) bestehen.

5. Vorrichtung nach Anspruch 1, dadurch gekennzeichnet, daß jeder Ausgabemechanismus einen ersten und einen zweiten gleitenden Drücker (70, 77) enthalten, die nebeneinander in der Kassette (42) untergebracht sind, wobei der erste Drücker (70) die Betätigung des Spanngleitstücks (43) und der zweite Drücker (77) die Öffnung der Klappe (31) steuert.

6. Vorrichtung nach Anspruch 5, dadurch gekennzeichnet, daß jeder Ausgabemechanismus außerdem aufweist :

— elastische Mittel, die dauernd den ersten Drücker (70) in eine sogenannte Arbeitsstellung drücken, in der der Drücker das Spanngleitstück (43) ins Innere des Fachs (7) drückt, dem der betrachtete Ausgabemechanismus zugeordnet ist, und die den zweiten Drücker (77) ebenfalls in eine sogenannte Arbeitsstellung drücken, in der die Klappe (31) freigegeben ist,

— Spannmittel, die sich der Wirkung der elastischen Mittel widersetzen und den ersten Drücker (70) von der Arbeitsstellung in eine Ruhestellung zu bringen erlauben, in der der Drücker das Spanngleitstück zurückzieht, und den zweiten Drücker (77) von seiner Arbeitsstellung ebenfalls in eine sogenannte Ruhestellung zu bringen erlauben, in der dieser Drücker die Öffnung der Klappe (31) verhindert,

— und Sperrmittel, die es ermöglichen, den ersten und den zweiten Drücker (70, 77) in ihren Ruhestellungen zu halten, wenn sie von den Spannmitteln in diese Stellung gebracht worden sind, und sie nacheinander, beginnend mit dem ersten Drücker (70), freizugeben.

7. Vorrichtung nach Anspruch 6, dadurch gekennzeichnet, daß die Sperrmittel aufweisen :

— einen Riegel (85), der in der Kassette (12) bei Begegnung mit den Drückern (70, 77) gleitet und der mit zwei Vorsprüngen (86, 87) versehen ist, von denen der eine mit einer Nut (88) in dem ersten Drücker (70) und der andere mit einer Nut (89) im zweiten Drücker (77) in Eingriff kommt, wenn die Drücker (70, 77) in ihrer Ruhestellung sind, wobei der Vorsprung (87), der mit der Nut (89) des zweiten Drückers (77) zusammenwirkt, tiefer als der andere Vorsprung eindringt, um den ersten Drücker (70) zuerst bei einer Entsperrung freizugeben,

— und eine Kompressionsfeder (90), die den Riegel (5) zurückdrückt, um dauernd dessen Vorsprünge (86, 87) gegen die Drücker (70, 77) zu drücken und die Vorsprünge (86, 87) in Eingriff mit den Nuten (88, 89) der Drücker (70, 77) zu halten, wenn letztere in ihrer Ruhestellung sind.

8. Vorrichtung nach Anspruch 7, dadurch gekennzeichnet, daß die ersten Betätigungsmittel einen Knopf (44) aufweisen, der den Riegel (85) nach außerhalb der Kassette (42) jedes Ausgabemechanismus verlängert und durch Zurückdrücken dieses Riegels die Vorsprünge (86, 87) aus den Nuten (88, 89) der Drücker (70, 77) auszurücken und die letzteren freizugeben erlaubt.

9. Vorrichtung nach Anspruch 8, dadurch gekennzeichnet, daß die beiden Betätigungsmittel, die von einem beweglichen Wagen getragen werden, einen auf einem Wagen angeordneten elektromagnetischen Schlagkopf aufweisen, der in Flucht zu dem Knopf (44) gelangt, der den Riegel (85) des Ausgabemechanismus eines Fachs verlängert, ohne daß der Wagen oder seine Elemente in den Freiraum unter der Klappe (31) des Fachs gelangt.

10. Vorrichtung nach Anspruch 6, dadurch gekennzeichnet, daß die beiden in der Kassette (42) angeordneten Drücker (70, 77) parallel zueinander und in derselben Richtung von ihrer Arbeitsstellung in ihre Ruhestellung und umgekehrt gleiten.

11. Vorrichtung nach Anspruch 10, dadurch gekennzeichnet, daß die Spannmittel aufweisen :

— einen geknickten Umlenkhebel (95), der um eine mit der Kassette (42) verbundene feste Achse (37) schwenkt und sich mit einem Ende auf Schultern (98, 99) abstützt, die in den Drückern (70, 77) vorgesehen sind und in Richtung der Arbeitsstellung dieser Drücker (70, 77) ausgerichtet sind, während ihre anderen Enden auf ein Zugglied (96) drücken, das senkrecht zu den Drückern (70, 77) gleitet.

12. Vorrichtung nach Anspruch 11, dadurch gekennzeichnet, daß die ersten Betätigungsmittel einen Knopf (45) aufweisen, der das freie Ende des Zugglieds (96) nach außerhalb der Kassette (42) verlängert und durch Niederdrücken auf die Drücker (70, 77) über das Zugglied (96) und den Umlenkhebel (95) eine Kraft ausübt, die sich der der elastischen Mittel widersetzt, derart, daß die Drücker (70, 77) in ihre Ruhestellung gelangen.

13. Vorrichtung nach Anspruch 12, dadurch gekennzeichnet, daß die zweiten Betätigungsmittel, die von einem beweglichen Wagen getragen werden, eine feste Nocke (109) aufweisen, die während der Verschiebung des Wagens in den Weg des das Zugglied (96) verlängernden Knopfes (45) gelangt und diesen Knopf ins Innere der Kassette eindrückt.

14. Vorrichtung nach Anspruch 13, dadurch gekennzeichnet, daß die zweiten Betätigungsmittel, die von einem beweglichen Wagen getragen werden, mindestens eine Rolle (111) aufweisen, die während der Verschiebung des Wagens die Klappe (31) wieder schließt und sie geschlossen hält in dem Augenblick, in dem die Nocke in den Weg des das Zugglied (96) verlängernden Knopfes (45) gelangt.

15. Vorrichtung nach Anspruch 5, in der die Klappe (31) an der Kassette (42) über eine waagerechte Achse (75) angelenkt ist und die beiden Drücker (70, 77) in der Kassette (42) parallel zu dieser Achse (75) und in gleichem Sinne von ihrer Arbeitsposition in ihre Ruheposition gleiten, dadurch gekennzeichnet, daß die Klappe (31) zwei Anschlagflächen (79, 80) in der Nähe ihrer Schwenkachse (75) aufweist, und zwar eine (79) für das Verschließen und die andere (80) für die Öffnung, wobei diese Anschlagflächen mit einem Finger des zweiten Drückers zusammenwirken, um ein Öffnen der Klappe (31) zu verhindern, wenn der zweite Drücker (77) in Ruhestellung ist, und um diese Öffnung zu begrenzen, wenn der zweite Drücker (77) in Arbeitsstellung ist.

16. Vorrichtung nach Anspruch 1, dadurch gekennzeichnet, daß das Spanngleitstück (43) in einem Führungsstück (48) gleitet, das zwischen den unteren Teilen der Flanken (42) eines Fachs (7) gegen die kassette (42) des dem betrachteten Fach (7) zugeordneten Ausgabemechanismus anliegt.

17. Vorrichtung nach den Ansprüchen 5 und 16, dadurch gekennzeichnet, daß der erste Drücker (70) nach außerhalb der Kassette (42) des Ausgabemechanismus durch einen Kopf (46) verlängert ist, der parallel zum spanngleitstück (43) gleitet und mechanisch mit letzterem über eine Achse (47) verbunden ist, die im rechten Winkel angeordnet ist und mit dem Kopf (44) verschraubt ist.

18. Vorrichtung nach Anspruch 16, dadurch gekennzeichnet, daß das Führungsstück (48) durch Verschachtelung zwischen den unteren Bereichen der Flanken (20) eines Faches, die aus den Kassetten (42) von zwei Ausgabemechanismen gebildet werden, befestigt ist, wobei die Flächen einer Kassette (42) eines Ausgabemechanismus und die einem Führungsstück (48) gegenüberliegenden Teile komplementäre Verschachtelungsformen in der senkrechten Richtung aufweisen, um die Höheneinstellung der Lage des Führungsstücks (48) in kleinen Schritten zu ermöglichen.

19. Vorrichtung nach Anspruch 18, dadurch gekennzeichnet, daß die komplementären Verschachtelungsoberflächen auf einer Flanke einer Kassette (42) eines Ausgabemechanismus eine senkrechte Rinne (49) und eine Gruppe von Zapfen (50), die entlang einer senkrechten Linie in gleichmäßigen Abständen angeordnet sind, und auf jeder Flanke des Führungsstücks gegenüber einer Kassette (42) eines Ausgabemechanismus eine senkrechte Rippe (51) mit einem zur Rinne (49) komplementären Querschnitt und Aushöhlungen (52) aufweisen, deren Durchmesser denen der Zapfen (50) entspricht und die auf einer senkrechten Linie gleichmäßig verteilt in einem Abstand voneinander angeordnet sind, der einem Untervielfachen des Abstands zwischen den Zapfen (50) entspricht.

20. Vorrichtung nach anspruch 1, dadurch gekennzeichnet, daß jedes senkrechte Fach (7) einer Fächerreihe (11) aus senkrechten Wänden (20) besteht, die entfernbar und mit der Kante an einer rückseitigen senkrechten Trägerplatte (21) mit einstellbarem Abstand befestigt sind.

21. Vorrichtung nach Anspruch 20, dadurch gekennzeichnet, daß die seitliche Wand (37) jedes Fachs (7) abnehmbar und zwischen den senkrechten Wänden (20) vor der senkrechten rückseitigen Platte (21) mit einstellbarem Abstand von dieser letzteren befestigt ist.

22. Vorrichtung nach Anspruch 1, dadurch gekennzeichnet, daß die Oberfläche der seitlichen Wand (37) eines Fachs (7), die dem Spanngleitstück gegenüberliegt, elastisch verformbar ausgebildet ist.

23. Vorrichtung nach Anspruch 22, dadurch gekennzeichnet, daß der Teil der seitlichen Wand (37) eines Fachs, der dem Spanngleitstück (43) gegenüberliegt, mit einer elastischen Auflage (55) bedeckt ist.

24. Vorrichtung nach Anspruch 1, dadurch gekennzeichnet, daß die Fächer (7) in mehrere parallele Fächerreihen von im wesentlichen gleicher Länge aufgeteilt sind, die von Wagen bedient werden, welche mechanisch starr miteinander verbunden sind und sich in einem unter den Fächern durch die Zusammenfassung der Freiräume (5) gebildeten Raum bewegen.

25. Vorrichtung nach Anspruch 1, in der die Klappen (180) an der Basis der Kassetten (170) der Ausgabemechanismen gelenkig gelagert sind und die Spanngleitstücke (157) seitlich zwischen den Flanken zweier nebeneinanderliegender Kassetten (170) angeordnet sind, dadurch gekennzeichnet, daß der Ausgabemechanismus aufweist :

— einen Drücker (165), der seitlich in einer Kassette (170) zwischen einer Ruhestellung und einer Arbeitsstellung hin und her gleitet, wobei die Verschiebungsrichtung von der Ruhestellung zur Arbeitsstellung mit der Richtung zusammenfällt, in der das Spanngleitstück (157) in das dem betrachteten Ausgabemechanismus zugeordnete Fach eindringt, wobei der Drücker einerseits einen Kopf (161) aufweist, der seitlich über die Kante der Kassette (170) auf der Seite des Spanngleitstücks (157) vorragt und diesen letzteren betätigt, und andererseits einen Finger (168) enthält, der zur Basis der Kassette (170) in Richtung der Schwenkbewegung der Klappe (180) zeigt und in der Ruhestellung mit einem Anschlag (183, 184) der Klappe (180) zusammenwirkt, um den Schließzustand der Klappe zu blockieren, und in der Arbeitsstellung außer Reichweite dieses Anschlags (183, 184) kommt, um die Schließung der Klappe (180) freizugeben,

— ein elastisches Mittel, das den Drücker (165) dauernd in die Arbeitsstellung drückt,

— ein Spannmittel, das von außerhalb der Kassette (170) betätigt werden kann und den Drücker (165) gegen die Wirkung der elastischen Mittel in die Ruhestellung zu bringen vermag,

— und ein Auslösemittel, das den Drücker (165) in seiner Ruhestellung hält, wenn er in diese von dem Spannmittel gebracht worden war, wobei das Auslösemittel von außerhalb der Kassette (170) freigegeben werden kann.

26. Vorrichtung nach Anspruch 1, in der die Spanngleitstücke (157) in Richtung der Fächer in Führungsstücken gleiten, dadurch gekennzeichnet, daß die Spanngleitstücke (157) dauernd in Richtung der Fächer von Federn (162) gedrückt werden, die sich zwischen den Spanngleitstücken und den Führungsstücken abstützen.

27. Vorrichtung nach Anspruch 1, in der die Klappen (180) an der Basis der Kassetten (170) über eine Schwenkachse (181) befestigt sind, dadurch gekennzeichnet, daß die Klappen auf ihrer Unterseite eine Mittelrippe (185) aufweisen, die senkrecht zur Schwenkachse (181) verläuft und an ihren beiden Enden abgeschrägt ist.

28. Vorrichtung nach Anspruch 25, dadurch gekennzeichnet, daß jede Klappe (180) zwei Anschläge (183, 184) aufweist, die in einer gemeinsamen Ebene an den beiden Enden der Schwenkachse angeordnet sind, wobei der Finger (168) des Drückers des Ausgabemechanismus der Kassette (170), an der die betrachtete Klappe (180) angelenkt ist, mit dem einen oder anderen der Anschläge (183, 184) je nach Montagerichtung der Klappe (180) bezüglich der Kassette (170) zusammenwirkt.

29. Vorrichtung nach Anspruch 1, dadurch gekennzeichnet, daß die zweiten Betätigungsmittel eine Rolle (192, 193) aufweisen, die von dem Wagen (190) getragen wird und die Klappen (180) geschlossen hält und sie leicht anhebt, wenn die ersten Betätigungsmittel der Ausgabemechanismen in Reichweite des Wagens (180) sind.

# FIG.1

FIG. 2

# FIG.3

# FIG.4

# FIG.5

# FIG.6

# FIG.7

# FIG.8

# FIG. 9

FIG.10

FIG.11

FIG.12

FIG.13

FIG.14

FIG.15

# FIG.16

# FIG.17

# FIG.18

FIG.19

FIG.20

# FIG. 21

FIG.22

FIG.23

FIG.24

FIG.25

14

# FIG.26